# EUROPEAN PATENT APPLICATION

(11) **EP 3 981 320 A1**
(43) Date of publication of application: **13.04.2022**
(21) Application number: 21195364.1
(22) Date of filing: 14.03.2014
(51) Int. Cl.: A61B 3/14, G06F 3/01, G02B 27/01, G06F 1/16

(54) **ENHANCED OPTICAL AND PERCEPTUAL DIGITAL EYEWEAR**

(30) Priority: 15.03.2013 US 201313841550
(62) Divisional of application: 14763034.7
(71) Applicant: Percept Technologies, Inc., Las Vegas, NV 89145 (US)
(72) Inventor: Lewis, Scott W., Las Vegas, Nevada 89145 (US)
(74) Representative: Robinson, David Edward Ashdown

(57) **Abstract**

Improved wearable optics is disclosed. The wearable optics comprises a frame member and a lens. The wearable optics also includes circuitry within the frame member for enhancing the use of the wearable optics. A system and method in accordance with the present invention is directed to a variety of ways to enhance the use of eyeglasses. They are: (1 ) media focals, that is, utilizing the wearable optics for its intended purpose and enhancing that use by using imaging techniques to improve the vision of the user; (2) telecommunications enhancements that allow the eyeglasses to be integrated with telecommunication devices such as cell phones or the like; and (3) entertainment enhancements that allow the wearable optics to be integrated with devices such as MP3 players, radios, or the like.

## Description

### CROSS-REFERENCE TO RELATED APPLICATION

This application is a continuation-in-part and claims the benefit of priority to U.S. Patent Application No. 13/739,929, filed on January 11, 2013, entitled "DIGITAL EYEWEAR", which is a continuation application of U.S. Patent Application No. 13/078,589, filed on April 1, 2011, entitled "DIGITAL EYEWEAR", now U.S. Patent No. 8,353,594, issued on January 15, 2013, which is a continuation application of U.S. Patent Application No. 12/621,423, filed on November 18, 2009, entitled "DIGITAL EYEWEAR", now U.S. Patent No. 7,918,556, issued on April 5, 2011, which is a continuation application of U.S. Patent Application No. 12/029,068, filed February 11, 2008, entitled "DIGITAL EYEWEAR", now U.S. Patent No. 7,758,185, issued on July 20, 2010, which is a divisional application of U.S. Patent Application No. 11/245,756, filed October 7, 2005, entitled "DIGITAL EYEWEAR", all of which are incorporated herein by reference.

This application is related to U.S. Patent Application No. ____ (Docket No. 5266P), filed on March 15, 2013, entitled "ENHANCED OPTICAL AND PERCEPTUAL DIGITAL EYEWEAR", which is also incorporated herein by reference.

### FIELD OF THE INVENTION

The present invention relates generally to wearable optics and more particularly to wearable optics that includes additional functionality.

### BACKGROUND OF THE INVENTION

Wearable optics is utilized for a variety of purposes. Wearable optics is used for improving one's vision for reading glasses and to protect one's vision.

Oftentimes protective goggles are used to protect eyes within dangerous areas. It is desirable to add additional functionality to glasses. This functionality can include a variety of forms, which are electronic, mechanical, aesthetic, etc. Accordingly, it is always desired to provide additional functionality to wearable optics. What is desired is a system and method which will increase the functionality of glasses beyond their normal use while still maintaining them for their primary uses. The present invention addresses such a need.

### SUMMARY OF THE INVENTION

A wearable optics device and method of use is disclosed. In a first aspect a method comprises utilizing dynamic eye tracking with a wearable optics device; wherein parameters personalized to a user can be provided based upon the dynamic eye tracking.

In a second aspect, a wearable optics device comprises a lens and a dynamic eye tracking mechanism in communication with the lens. Parameters personalized to a user can be provided based upon the dynamic eye tracking.

In a third aspect, a method comprises utilizing dynamic eye tracking with a wearable optics device. A perceptual optimization is utilized based upon the dynamic eye tracking.

In a fourth aspect, a wearable optics device comprises a lens and a dynamic eye tracking mechanism in communication with the lens. A perceptual optimization is utilized based upon the dynamic eye tracking.

In a fifth aspect, a method comprises utilizing dynamic eye tracking with a wearable optics device. An augmented reality overlay is utilized based upon the dynamic eye tracking.

In a six aspect, a wearable optics device comprises a lens; and a dynamic eye tracking mechanism in communication with the lens. An augmented reality overlay is utilized based upon the dynamic eye tracking.

In a seventh aspect, a method comprises utilizing dynamic eye tracking with a wearable optics device. Augmented reality navigation is utilized based upon the dynamic eye tracking.

In an eighth aspect, a wearable optics device comprises a lens; and a dynamic eye tracking mechanism in communication with the lens. Augmented reality navigation is utilized based upon the dynamic eye tracking.

### BRIEF DESCRIPTION OF THE DRAWINGS

Figure 1 is a diagram that illustrates Media focals.
Figure 2 comprises an information bar on media focal wearable optics.
Figure 3 is a block diagram of wearable optics that is utilized in a music environment such as an MP3 player.
Figure 4 is a block diagram that illustrates wearable optics that is utilized as a cell phone.
Figure 5A is a block diagram that illustrates the cellular phone circuitry of Figure 4.
Figure 5B illustrates perceptual optimization utilizing optical and perceptual parameters.
Figure 5C illustrates the enhanced digital eyewear architecture.
Figure 6 illustrates the parts of an eye that may be utilized with the eye tracking mechanism of an embodiment.
Figure 7 illustrates a social networking application utilized with the wearable optics device.
Figure 8 illustrates a messaging application utilized with wearable optics device in accordance with an embodiment.
Figure 9 illustrates the wearable optics device utilized by an athletic sports spectator in accordance with an embodiment.
Figure 10 illustrates the wearable optics device utilized by an athletic sports player in accordance with an embodiment.
Figure 11 illustrates an augmented reality information, navigation, and advertising application utilized with the wearable optics device.
Figure 12 illustrates an augmented reality information patient data application utilized with the wearable optics device used in conjunction with a remote device.
Figure 13 illustrates a shading control application utilized with the wearable optics device.
Figure 14 illustrates an augmented reality application utilized with the wearable optics device.
Figure 15 illustrates a physical gaming application utilized with the wearable optics device.
Figure 16 illustrates a first embodiment of an online/mobile gaming application utilized with the wearable optics device.
Figure 17 illustrates a second embodiment of an online/mobile gaming application utilized with the wearable optics device.
Figure 18 illustrates shading control utilizing the wearable optics device.
Figure 19 illustrates an optical/perceptual operating system with the wearable optics device.
Figure 20 describes an embodiment of the digital architecture of the wearable optics device.
Figure 21 illustrates the embodiment of a system simulator for use by developers of applications and new lenses or expansion of the wearable optics device.
Figure 22A thru Figure 22F illustrate the embodiment of inverse shading using the wearable optics device.
Figure 23 illustrates an embodiment of eye tracking illumination and enhanced efficiency utilizing the wearable optics device.
Figure 24 illustrates an embodiment of real-time augmented reality overlay utilizing the wearable optics device.

### DETAILED DESCRIPTION

The present invention relates generally to wearable optics and more particularly to wearable optics that includes additional functionality. The following description is presented to enable one of ordinary skill in the art to make and use the invention and is provided in the context of a patent application and its requirements. Various modifications to the preferred embodiments and the generic principles and features described herein will be readily apparent to those skilled in the art. Thus, the present invention is not intended to be limited to the embodiments shown, but is to be accorded the widest scope consistent with the principles and features described herein.

A system and method in accordance with the present invention is directed to a variety of ways to enhance the use of wearable optics devices.

To describe the features of the present invention in more detail refer now to the following description in conjunction with the accompanying figures.

### 1. Media focals 100

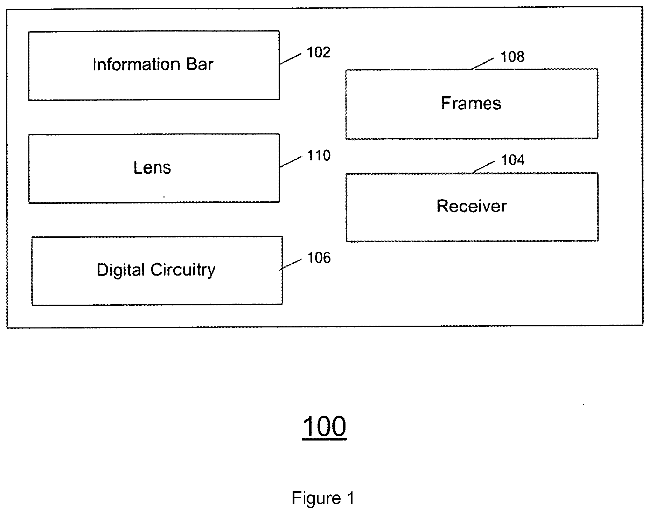

Figure 1 is a diagram that illustrates Media focals 100. Media focals 100 comprises an information bar 102, receiver 104, digital circuitry 106, frames 108 and lens 110. Media focals 100 allow for enhancing the wearable optics for its primary purpose, for example, a digital camera could be placed within the wearable optics to allow for seeing certain of these images. For example, the circuitry 106 for the media focals 100 could be placed within the frame 108 of the wearable optics. The lens 110 could have a totally reflective surface, or a partially reflective surface using LCDs or the like. In effect the wearable optics could look like see-through glasses, but through the use of the circuitry 106 within the wearable optics it is actually a media focal. Additionally, the wearable optics could incorporate a camera to project the user onto a second lens to achieve a see-through effect.

In a preferred embodiment, an information bar 102 is provided across a portion of the wearable optics which is visible to the user. This information bar 102 is used to convey a variety of types of information.

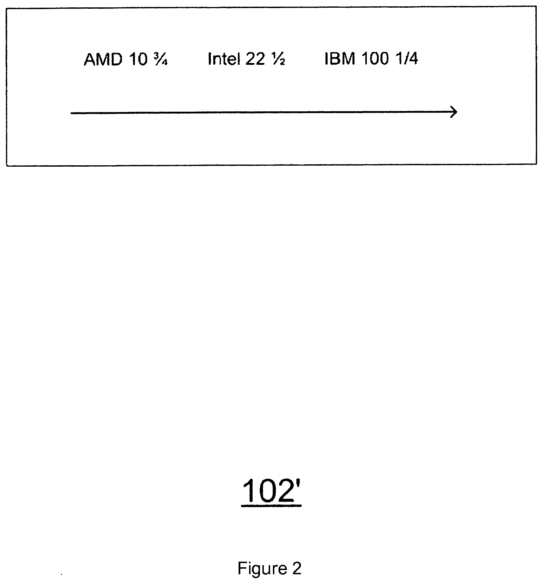

Figure 2 comprises an information bar 102' on media focal wearable optics. The information bar 102' can be a stock ticker scrolling across the top portion of the wearable optics, as is shown in Figure 2. Although the information bar 102' is shown displaying a stock ticker, other kinds of information such as song titles, lyrics and the like could be displayed in the information bar. This information bar is referred to as E-focals. This information might be provided from a digital receiver through an FM station, through a cellular wireless device, or an MP3 player. Additional functionality of the E-focal will be described with more detail with respect to the cell phone enhancements as well as the music player enhancements.

One of the key features of the media focals 100 is the use of the media focals to enhance the primary function of the user, that is, being able to more accurately and clearly see the objects. In such an environment, for example, it is possible to have a zoom feature circuit to allow for the use of the wearable optics as binoculars. This would allow for the user to see objects more closely based on certain activities of the user. For example, there may be eye or pressure sensors on the wearable optics that will activate the binocular circuitry in the glasses which could receive visual data through a camera, CCD receiver of the like.

In the preferred embodiment, the circuitry 106 would be located somewhere in the frame of the glasses to provide this functionality and as circuits became smaller and devices became smaller it would be easier and easier to embed the circuitry that is well known for use for such functions directly within the device. The circuitry 106 in the device could be, for example, eye sensors which could be pressure sensors, capacitive sensors or some other type of sensor for allowing the eyes to direct the activities. Eye movement sensors, for example, could be used to activate and control the binocular glasses. Similarly, a digital camera could be put on the glasses that would allow the same kinds of technology to take pictures by the person directly.

In a similar vein, the glasses could be used as a normal corrective lens glass utilizing the digital imagery, so that, for example, a user has a certain prescription that they use with their normal prescription glasses to view an object clearly. As the user's eyes change, it would be possible that an optometrist could download the new prescription to the wearable optics such that a digital transformation of the image information is provided which is compatible with the new prescription.

Also, in a preferred embodiment a method for sensing and controlling the digital media could be implemented in a variety of ways. For example, an activity of the eye itself would control the activity of the media focal. So, for example, if the idea was to zoom the image, the eye would blink twice. It would also be possible to detect facial and eye movements (squinting, for example), as well as changes in the pupil and iris.

In a further embodiment, it would be possible for the eyeglasses in accordance with the present invention to function within a client/server model or Bluetooth (Wi-Fi) model. Utilization of the client/server model and Bluetooth Wi-Fi would make possible, for example, the display of live news or special reports (such as financial reports) from the Internet or similar sources on the eyeglasses. This would also allow for portions of circuitry to be located remotely such that less circuitry in the wearable optics is required.

The wearable optics could also include a logo, for example, law enforcement officers could have their glasses emblazoned with "Police", "Sheriff", "MP", etc.; young people could have their eyeglasses emblazoned with words and images that reflected their favorite performers, etc.; sports teams could offer the eyeglasses at discount with team monograms, etc. They could also be purchased by companies, emblazoned with the company logos, and given out as retirement gifts, etc.

### 2. Music Environment

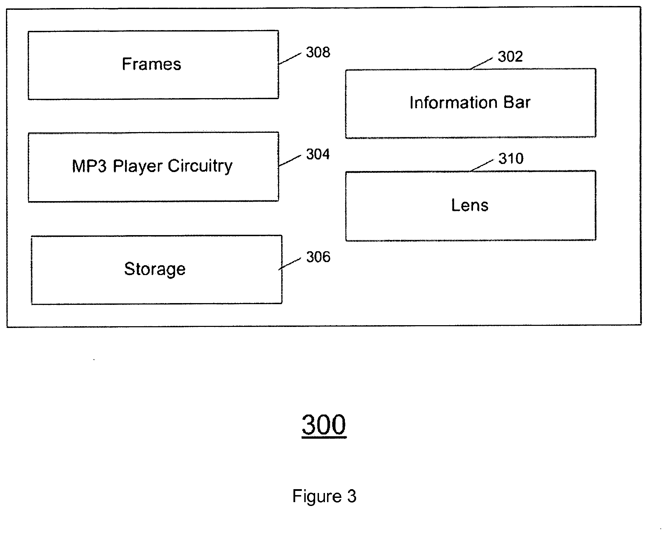

Figure 3 is a block diagram of wearable optics 300 that is utilized in a music environment such as an MP3 player. Figure 3 comprises wearable optics 300, an information bar 302, MP3 player circuitry 304, storage 306, frames 308, and one or a plurality of lenses 310. Another environment as has been above described is the music environment. What would be desirable would be to provide music glasses in which an MP3 player on an IPod or the like is incorporated in the wearable optics, either in a wired or wireless environment. Through the use of this type of system, a plurality of users could be networked via an MP3 player type environment within a hotspot, or the like, which would allow one to have downloads of whatever music is required through the eyeglasses. The system could allow for downloadable music which could be selected via scrolling and the like through voice recognition systems.

By connecting to a client-server network or Bluetooth Wi-Fi installation, for example, the eyeglasses could link to a multimedia network, authorize downloading and billing for selected music. By this means, access to a plurality of libraries for music selections could be provided.

It would also be possible to provide access to streaming audio media. Also, access can be provided to multimedia libraries, etc., via the client/server model.

Information could be received via a digital client/server model enabled to work with iPods or MP3 players. Similarly, bluetooth wireless technology could be utilized to provide access to music and live audio sources.

The wearable optics could also be utilized in conjunction with wireless technology to allow a user or a plurality of users to participate simultaneously in single or group karaoke singing. The wearable optics could be used specifically to display the lyrics of a song, melody, notes, name of the song or other associated references.

It would also be possible to receive and listen to AM or FM radio signals, via an AM/FM radio tuner connected to the wearable optics hardware.

In this type of environment, the headphones can be either digital or analog. The user doesn't need to have 10,000 songs, for example. They can come enrolled in an in-song virtual network library upon entering a hotspot. Therefore, the local storage 306 could be limited. In addition, this would provide location identity information for one who is using the network. The songs can be streamed as well as downloaded. The songs could be purchase using the wearable optics. The system could be scalable; depending upon what kind of device was being used.

### 3. Telecommunications Environment

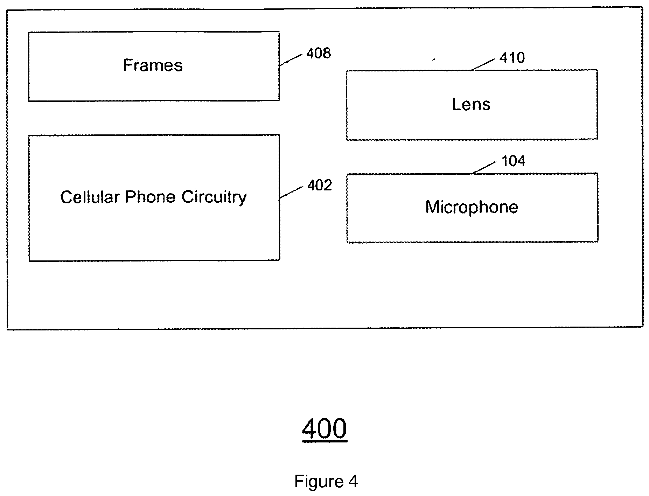

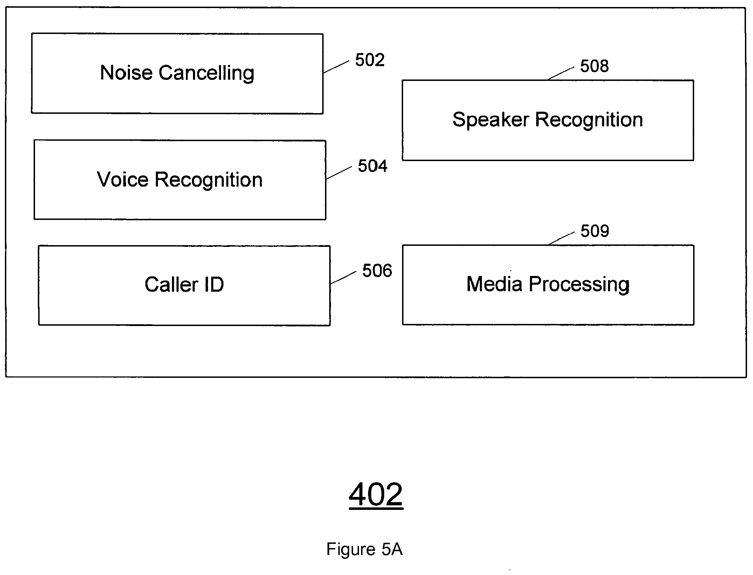

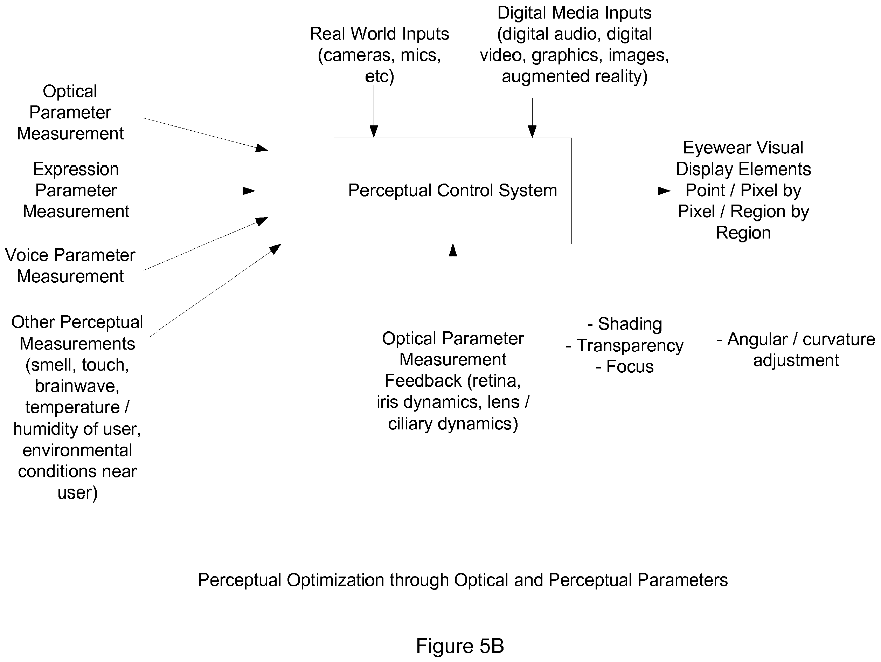

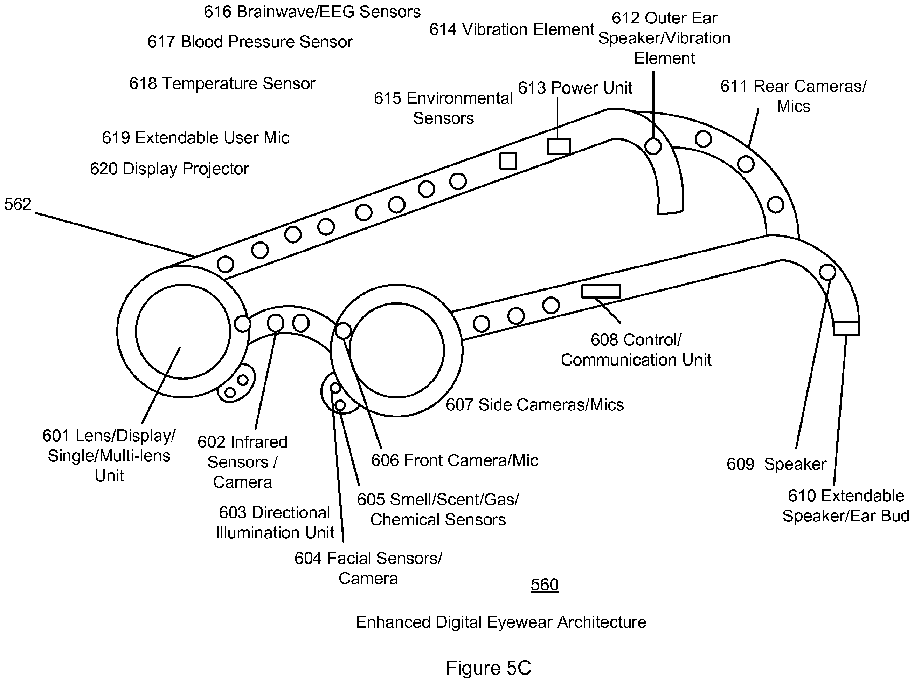

Figure 4 is a block diagram that illustrates wearable optics that is utilized as a cell phone 400. Figure 4 comprises cellular phone circuitry 402, a microphone 104, frames 408 and one or a plurality of lenses 410. The cell phone wearable optics 400 could be implemented utilizing digital telephone technology. Circuitry 402 within the wearable optics could be utilized to allow a telephone number or other visual information such as that provided by multimedia messaging services to be displayed on the lens 410 of the wearable optics as shown in Figure 3. Figure 5 is a block diagram that illustrates the cellular phone circuitry of Figure 4. Figure 5 comprises noise cancelling circuitry 502, voice recognition circuitry 504, caller ID circuitry 506 and speaker recognition circuitry 508 and media processing circuits 509. The telephone number could be activated via the digital circuitry 402 as part of the media focals 100. In addition, the circuitry could be made truly digital via a digital signal processor which is coupled to a camera otherwise in the environment. The above system would allow for voice recording through use of a microphone 104 and would allow for voice recognition through use of the voice recognition circuitry 504, which would allow for signal conditioning on the cell phone in a variety of ways.

The cell phone environment 402 provides a plurality of areas for improvement utilizing existing technologies. Firstly, one of the major annoyances in cell phone use is that the users have to speak in a loud manner because of background noise and the like. There are a variety of reasons for this problem including the placement of the microphone of the cell phone relative to the speaker's mouth, due to the aforementioned background noise, and other issues. By placing the microphone 104 strategically on the wearable optics such as near the noise or mouth the user will not have to speak as loudly. The microphone could also be located in flip down microphones. In addition noise canceling circuitry 502 could be utilized to remove the background noise. The microphone capability would include the advantage of utilizing noise rejection techniques. Buttons located on the wearable optics can be utilized to control features thereon. Finally, the microphone 104 could utilize whisper technology such that the speaker will not have to speak as loudly.

The wearable optics would in a preferred embodiment include voice recognition circuitry 504 and caller ID circuitry 506. The conventionality for hearing and talking in a preferred embodiment would be located in ear and nose pad portions of glasses. Referring back to Figure 3, the electronics for the cell phone in a preferred embodiment would be within the frame 308 of the wearable optics. In addition the wearable optics would include a fully integrated information bar 302. Finally, a speaker recognition algorithm 508 as shown in Figure 5 would allow only the voice of the user to be recognized and the background noise would be cancelled. Accordingly, the unique characteristics of the speaker are provided via an audible model.

This can performed utilizing a variety of methods. For example analyzing the voice of the user and combining the analysis with noise cancellation. In another example the user can talk softly and cancel noise and a directional microphone is used which takes advantage of device location.

Similar to the media focal and MP3 player environments, a digital client/server or Bluetooth/wifi model could be adapted to link the wearable optics to external communication equipment. Such equipment could include digital cell phones, PDAs or wifi enabled PCs or other devices. Such an embodiment could enable review of voicemail, screen viewed emails, text to speech audio email conversions, multimedia messaging services, and other data sources.

Wireless or Bluetooth interconnection could also make possible VOIP glasses to be utilized instead of a cell phone. Other features enabled by a wireless link could link the eyewear to MP3 devices, an iPod, a printer, wireless/wired TV, coupons, and the like. Also "PDA glasses" could provide built in a time display, alarm calendar, interfacing with PCs or network sources, a speaker and the like.

As can be seen from the above description, digital eyewear is a rapidly evolving field with from the early innovation of digital eyewear with eye tracking capabilities thru Lewis ('185 filed Feb 2008), to eyewear with more complex lenses and communication/display capabilities (Lewis '556, filed Nov 2009), to more enhancements and capabilities (Lewis '594, filed April 2011). As technology progresses to make sensors, cameras, processors, and circuitry smaller, more and more capabilities become possible to implement using digital eyewear. This enhanced digital eyewear can be used to solve important areas ranging from superior vision enhancement and mobile advertising, to use in dental/medical procedures and physical and Internet navigation. The application and value of the enhanced eyewear is increased even further when combined with augmented reality, social networking, messaging, and communications.

With the introduction and use of new materials for lens and filter integration new enhancements and capabilities of the digital eyewear can be further realized. These materials include advances in OLED, LED, transparent LED, flexible LED, crystalline, prism, holographic, polarizing, and translucent material and the like to electrorefractive, electrodiffractive, electroreflective, composite refractive materials and the like, with one or more lens material layers and passive or active display or projection based implementations.

With these new capabilities an important new set of optical and perceptual parameters can be measured and used as inputs, controls, or feedback elements that increase even further uses and value of the eyewear and lead to important improvements that can be used for teaching, sports, health, and improved perception.

Accordingly systems and methods in accordance with embodiments are disclosed that provide these enhanced features for wearable optics devices. To describe these features and embodiments in more detail refer now to the following description in conjunction with the following discussion. A key feature associated with these enhancements is providing a variety of perceptual parameters that can be utilized with the wearable optics devices. Examples of perceptual parameters include but are not limited to optical expression, voice, brain wave, environmental, audio, video, navigational, augmented reality, algorithmic, spatial, cognitive, interpretive.

Figure 5B illustrates a perceptual optimization system 550. The perceptual optimization system 550 receives a variety of inputs including optical parameter measurements, real world inputs, digital media inputs, expression parameter measurements, optical parameter measurement feedback, other parameter measurements to provide wearable optics visual display elements. Optical parameter measurements include for example, ciliary, pupil, corneal, lens, iris, eye lid, retina measurements. Real world inputs could be for example inputs from one or more microphones or cameras. Digital media inputs could be for example from digital audio, digital video, graphics, images and augmented reality.

Other perceptual parameters could be for example, smell, touch, brainwave, temperature/humidity of the user, environmental conditions near the user. The optical feedback could be provided through information received about the retina/iris dynamics and/or the lens ciliary dynamics.

Figure 5C illustrates a wearable optics device architecture 560 in accordance with an embodiment. The architecture includes a frame 562 which includes a plurality of sensors on various areas thereon. Biometric sensors include a blood pressure sensor 617, temperature sensor 618, EEG sensor 616 and the like. Environmental sensors 615 are also provided. There are microphone sensors 606,607, 611 on various areas of the frame. Included on the frame 562 are cameras rear, front and side 606,607, 611 to detect objects .Within the lens is a lens display 601. A display projector 620 is provided thereon to project images on the lens display 601. The lens display 601 can be a single unit or multiple unit lens. There are infrared sensors 602 as well as a directional illumination unit 603 on the bridge of the architecture 560. There are facial and mouth movement sensors 604 and or cameras located on the lens holder of the architecture 560. There is a speaker and n extendable speaker 610 located on the frame when worn. The speaker 610 could be held in place with a head band. An outer ear speaker//vibration element 612 is provided thereon. A control communication unit 608 is utilized to control the architecture 560. A power unit can be utilized to enable the architecture. Typically the power unit 613 comprises a rechargeable battery. The battery can be charged via a connector, such as but not limited to an USB connector to a charging device laptop, tablet or desktop PC for example. In addition the device could be solar powered either by solar cells being placed on the device or the solar cells could be placed on articles of clothing (i.e. hat, shirt or pants for example) to facilitate the charging thereof. The architecture 560 includes a directional illumination unit 603, smell sensors 605 and an extendable user microphone 619.
In an embodiment, the sensors may comprise any or any combination of gyroscopes, accelerometers, torque sensors, weight sensors, pressure sensors, magnetometers, temperature sensors, light sensor, cameras and microphones, GPS, wireless detection, altitude sensors, blood pressure , heart rate sensors, biometric sensors, radio frequency identification (RFID), near field communication (NFC), mobile communication, Wi-Fi, strain gauges, fingerprint sensors, smell sensors gas sensors, chemical sensors, color sensors, sound sensors, acoustic sensors, ultraviolet sensors, electric field sensors, magnetic field sensors, gravity sensors, wind speed sensors, wind direction sensors, compass sensors, geo-locator sensor, polarized light sensors, infrared emitter sensors.

This architecture can be utilized with a conventional mobile operating system such as Android or IOS or with a new operating system incorporating optical parameters and perceptual parameters for even further capabilities and enhanced perception - eye optical or perceptual operating system (eyePOS). By using this approach and capability set, a whole new class of custom applications ("apps") can be created using the standard mobile operating systems or eyePOS and an eyePOS simulator to address manifold valuable applications that can improve human learning, entertainment, and health on one side to new navigation systems (physically linked and search linked) and enhanced perception. To describe these feature in more detail refer now to the following description.

A method and system in accordance with an embodiment comprises utilizing dynamic eye tracking with a wearable optics device; wherein parameters personalized to a user can be provided based upon the dynamic eye tracking. The method and system which includes providing an enhancement utilizing objective and subjective quality standards based upon perceptual parameters. The perceptual parameters include any and any combination of optical expression, voice, brain wave, environmental, audio, video, navigational, augmented reality, algorithmic, spatial, cognitive, interpretive. The wearable optics device controls any or any combination of mimics, amplifies, or expands a user perceptual physiology utilizing perceptual parameters.

The wearable optics device can include one or more inserts into eyeglasses. The eyeglasses comprise quad state eyeglasses. Shading control can be utilized on the wearable optics device. The shading control can be provided by one or more projectors within the wearable optics device. An occlusion effect can be projected on a lens of the wearable optics device. The shading can be provided on a lens of the wearable optics device wherein the surrounding area is occluded or reversed. The shading is provided by a polarized filter. The shading control can be provided by the lenses within the wearable optics device. The shading can be controlled using optical parameters. The optical parameters include any or any combination of ciliary, pupil, corneal, lens, iris, eye lid, and retina measurements. Materials that can electrically control any or any combination of chromatic, refractive, diffractive, transparent, reflective properties of the wearable optics device are utilized with the dynamic eye tracking. The lens can be any or any combination of transparent LCD, LED, OLED, flexible LED, flexible OLED, transparent matrix, semi-transparent matrix, prism based, holographic , electroluminescence, eletroreflective, dynamic filtering materials.

The wearable optics device comprises an electrochromatic material. In a system and method in accordance with an embodiment one or more elements are utilized within the wearable optics device to provide image information into the eye. The one or more elements include any or any combination of a lens projector, retinal projection. The retinal projection or projector plus prism provide the occlusion.

The wearable optics device includes shading control for the eyewear. In the wearable optics device, portions of an image viewed by the wearable optics device can be shaded to control brightness. The lenses of the wearable optics device can be controlled polarizing, transparent OLED, or projection and prism lenses.

The parameters my include any or any combination of prescriptions for improving the vision of a user, a zoom feature, a microscope feature, magnifying feature, retinal projection feature. The wearable optics device can be utilized in a simulator. In an embodiment, a focal of the wearable optics device is utilized in conjunction with the dynamic eye tracking.

The parameters can include any or any combination of a zoom feature, a microscope feature, magnifying feature, illumination feature; a retinal projection feature. In an embodiment a 360 degree view can be provided. The 360 degree view can be any or any combination of a left or right panning, up and down panning, three dimensional rotations.

In another embodiment, an illumination feature is directed to a specific area based upon the dynamic eyetracking mechanism. A wearable optics device camera feature can filter certain light waves for controlled viewing or visual effects. The filtering feature can include controlling noise reduction, polarization, and creative effects. The wearable optics device feature can include controlling a stability control for facial or object focus. In an embodiment optical parameters can be utilized. The optical parameters include any of or any combination of ciliary, pupil, corneal, retina, lens, iris measurements. An embodiment may include detecting head movement. An acoustic wave mechanism may be utilized within the wearable optics device. A brain wave mechanism may be utilized within the wearable optics device. A magnetic wave mechanism may be utilized within the wearable optics device.

The wearable optics device can be utilized in a variety environments including but not limited to athletic, gaming, gambling, educational, military, firefighting, medical dental, and the like. To describe the features of the present invention in more detail refer now to the following description in conjunction with the accompanying figures

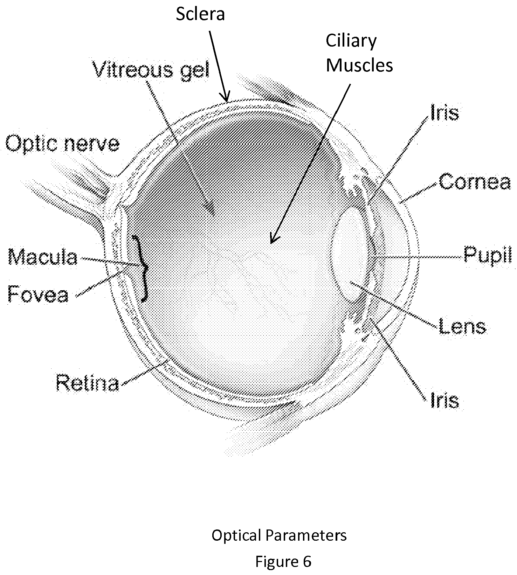

Figure 6 illustrates the parts of an eye that may be utilized with the eye tracking mechanism of an embodiment. In an embodiment, the iris, retina cornea, pupil, ciliary, and lens can all be utilized either singly or in combination to enable the dynamic eye tracking mechanism.

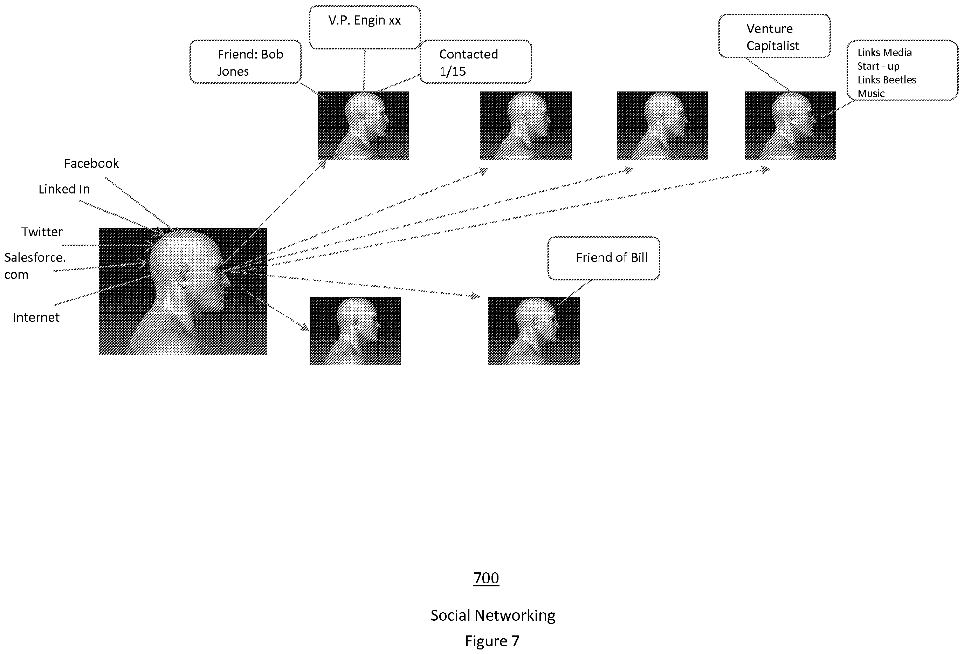

Social networks can be leveraged advantageously with the wearable optics device in accordance with an embodiment. Figure 7 illustrates a social networking application 700 utilized with the wearable optics device. The networks of Facebook, Linked In, Twitter, Salesforce.com, and other networks, as well as the Internet are connected to the wearable optics device.

Individuals that are "Friends" for example, can be identified by a highlight by the wearable optics device. Information about individuals can be gathered by using eyes utilized by the wearable optics device architecture. In an embodiment, the individual can be selected. The individual can be identified in a variety of ways for example using facial recognition, target individual information, GPS, RFID, NFC, optical information, voice recognition, and mobile location.

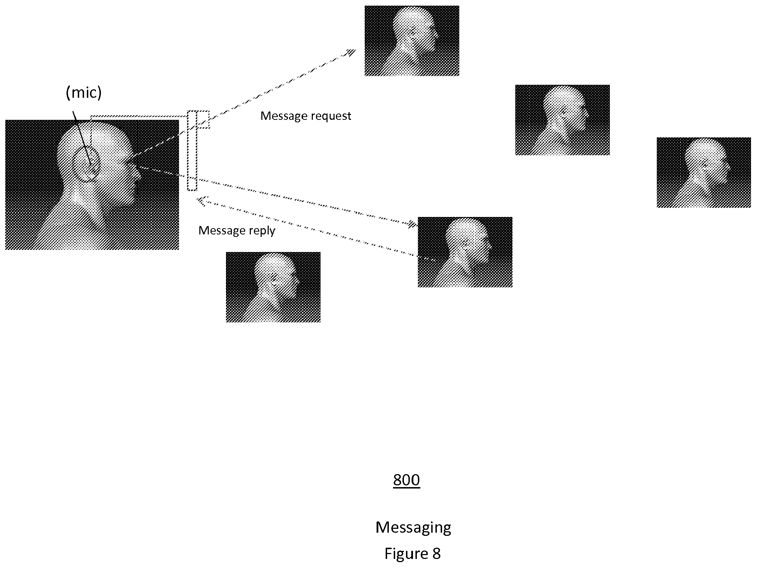

Figure 8 illustrates a messaging application 800 utilized with wearable optics device in accordance with an embodiment. In this embodiment, information is transmitted via mobile, text, R2R, Internet, Wi-Fi, Facebook message, Twitter's tweet. The wearable optics device can utilize R2R, NFC, Wi-Fi, Internet to communicate. It is possible to talk using a microphone, sensors near the face, jaw, and nose can be utilized to provide control of the messaging application. In addition lip motion, and lip reading can be utilized to transmit voice in a silent and confidential manner. An individual can be targeted by using selected eye movements.

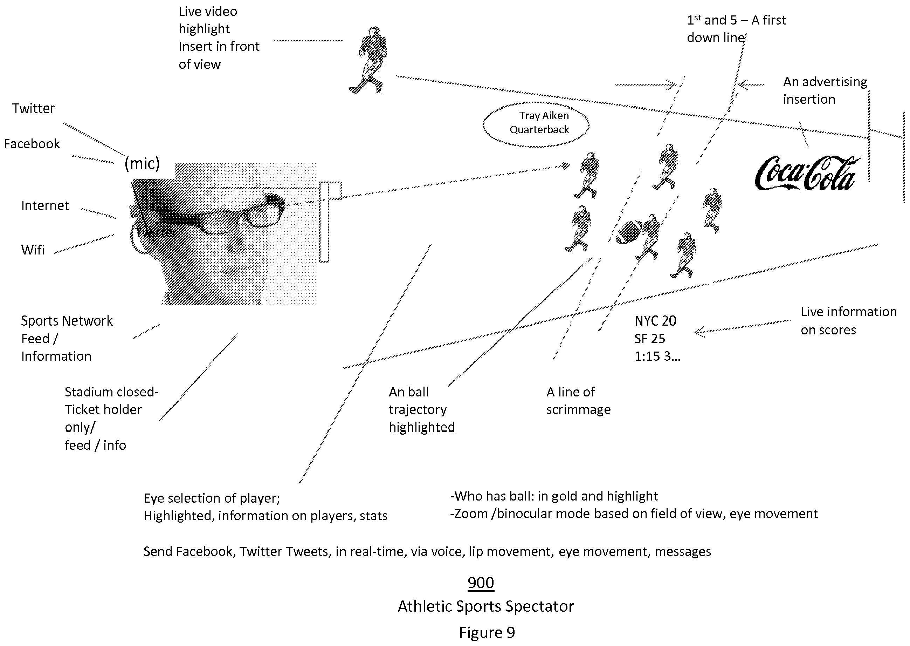

Figure 9 illustrates the wearable optics device utilized by an athletic sports spectator in accordance with an embodiment 900. Networks such as Twitter, Facebook, Internet are connected to the spectator. For example the spectator can see who has the ball and its course during a play. Who has the ball as well as the ball's location is highlighted. Video information can be overlayed from scores of other games. Information about the location of the football during the game (line of scrimmage, first down line). Video highlights of the game could be provided as well as augmented reality media.

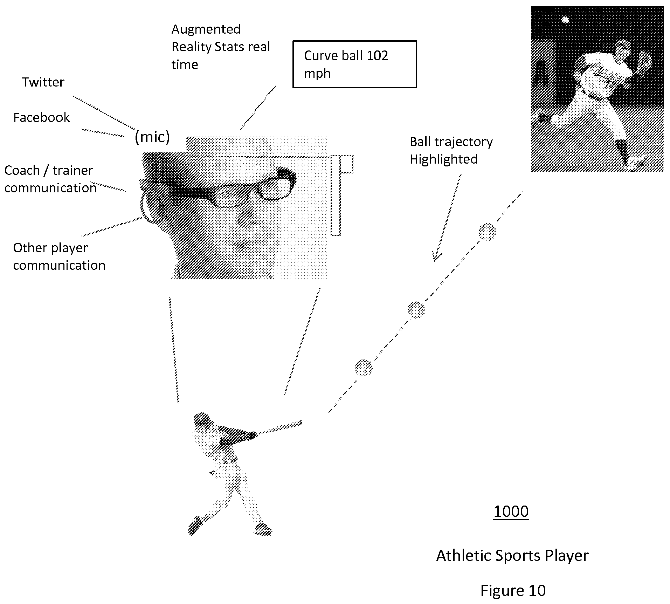

Figure 10 illustrates the wearable optics device utilized by an athletic sports player in accordance with an embodiment 1000. Networks such as Twitter, Facebook, Coach/trainer communication, and other player communications are connected to the player. For example the spectator can see that a curve ball is hit at 102 mph. The trajectory of the ball is highlighted.

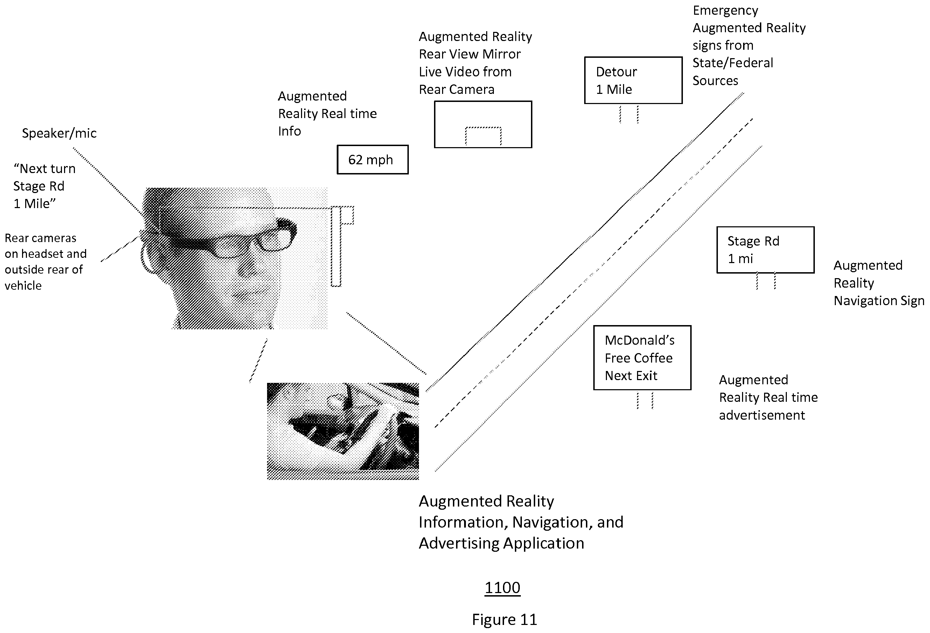

Figure 11 illustrates an augmented reality information, navigation, and advertising application 1100 utilized with the wearable optics device. In this embodiment, information is transmitted via mobile, text, R2R, Internet, Wi-Fi, Facebook message, Twitter's tweet. The wearable optics device can utilize mobile, R2R, NFC, Wi-Fi, Internet to communicate. In one example the wearable optics device is utilized in a vehicle. In this example the wearable optics device includes speaker microphone and rear camera on the headset and also on the rear of a vehicle for example. Augmented reality real time information is provided. For example, the Augmented Reality Real time information provided is that the vehicle is traveling at 62 mph.

There also may be Augmented Reality Mirror Live Video from Rear Camera of the car. For a sign that reads, "Detour 1 Mile" is shown on as an emergency Augmented Reality sign from State/Federal Sources which could also provide additional information.

In another example, "McDonald's Free Coffee" next exit, seen as an Augmented Reality real-time advertisement. "Stage Road 1 Mile", will also be seen as an Augmented Reality Sign while the voice message "Next turn Stage Rd. 1 mile" is transmitted to the driver together comprising an enhanced Augmented Reality GPS and navigation system.

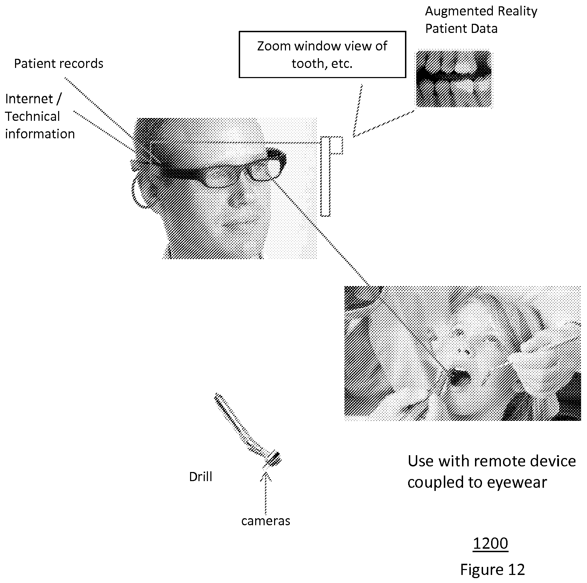

Figure 12 illustrates an augmented reality information patient data application 1200 utilized with the wearable optics device used in conjunction with a remote device. In this embodiment, information is transmitted via mobile, text, R2R, Internet, Wi-Fi, Facebook message, Twitter's tweet. The wearable optics device can utilize mobile, R2R, NFC, Wi-Fi, Internet to communicate.

Patient records and internet technical information are connected to the eyepiece and microphone of the person who is utilizing the wearable optics device. Utilizes an augmented reality zoom window to identify medical feature. Augmented reality patient data is made available to the person via the eyewear. There may also be a remote device camera utilized on the drill of a dentist for example. The dentist for example can utilize the dynamic eye tracking mechanism to focus on the correct tooth.

An overlay of the x-ray of the tooth can be seen utilizing the augmented reality. An augmented reality overlay of dental records and Internet research in tooth treatment is available. Dentist can use a remote drill with augmented reality. Illumination and zoom can also be utilized with an augmented reality window.

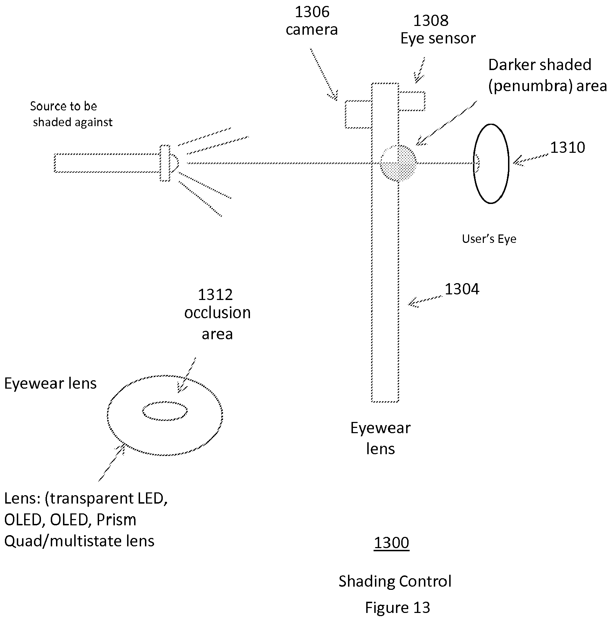

Figure 13 illustrates a shading control application 1300 utilized with the wearable optics device. In this embodiment, information is transmitted via mobile, text, R2R, Internet, Wi-Fi, Facebook message, Twitter's tweet. The wearable optics device can utilize mobile, R2R, NFC, Wi-Fi, Internet to communicate. Shading settings can be chosen through push buttons on the eyewear frame, via eye movement, or automatically. The shading can be uniform across the eyewear lens or concentrated in a specific area or areas of the lens.

In an embodiment a lamp/flashlight 1302 projects light to eye1310. The camera 1306 and eye sensor 1308 pick up the light. The lens 1304 can be any or any combination of transparent LCD, LED, OLED, flexible LED, flexible OLED, transparent matrix, semi-transparent matrix, prism based, holographic , electroluminescence, eletroreflective, dynamic filtering materials.

Light can be occluded in a specific area 1312 utilizing the wearable optics device. The camera 1306 determines position of light to be occluded (real time). The eye sensor 1308 determines the position of the eye/pupil/retina (real time). The camera1306 /eye sensor 1308 determines line of sight between light to be occluded and eye 1310 and intersect area on lens 1304 (real time) or area to project occlusion from a projector embodiment.

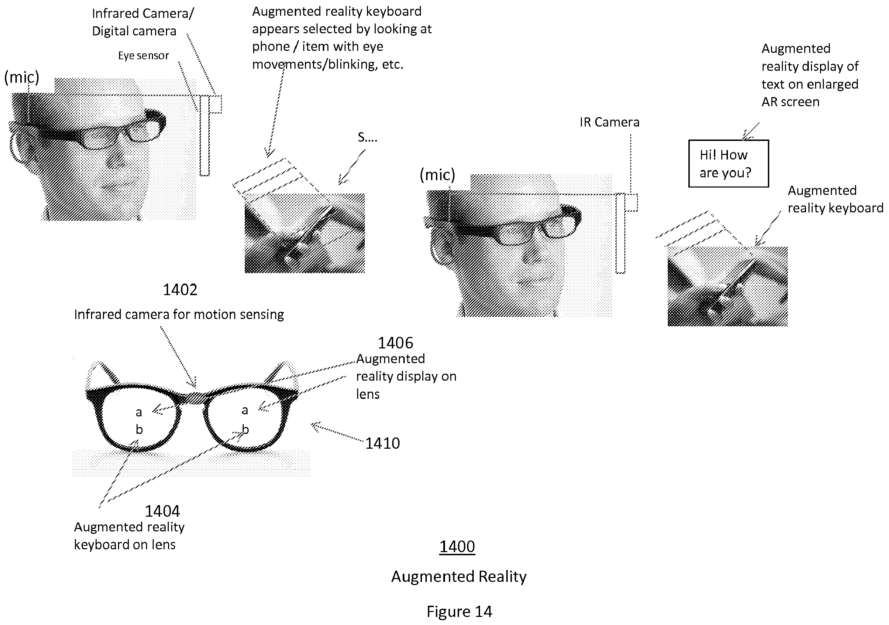

Figure 14 illustrates an augmented reality application1400 utilized with the wearable optics device 1410. In this embodiment, information is transmitted via mobile, text, R2R, Internet, Wi-Fi, Facebook message, Twitter's tweet. The wearable optics device 1410 can utilize mobile, R2R, NFC, Wi-Fi, Internet to communicate.

In an embodiment, an augmented reality keyboard 1404 appears selected by look at the phone/item and then blinking or the like. The augmented reality (AR) keyboard 1404 is utilized that is controlled by the dynamic eye tracking mechanism. An infrared camera 1402 is used to sense the position of any of the user's hand, hand movement, finger position, finger movement on the AR keyboard such as key highlight and key click sound. There is an augmented reality display 1406 which is an enlargement of the small phone display, on the lens. There is also an augmented reality keyboard which is shown as being on the lens.

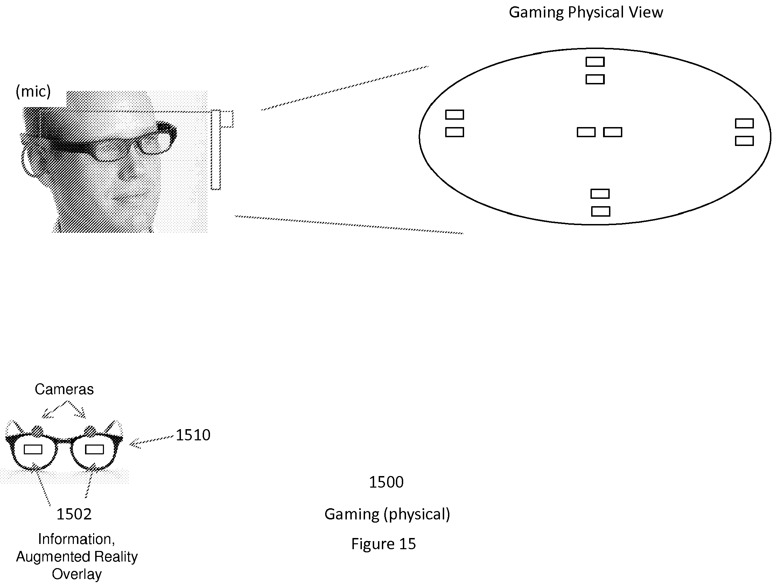

Figure 15 illustrates a physical gaming application 1500 utilized with the wearable optics device 1510. In this embodiment, information is transmitted via mobile, text, R2R, Internet, Wi-Fi, Facebook message, Twitter's tweet. The wearable optics device 1510 can utilize mobile, R2R, NFC, Wi-Fi, Internet to communicate.

In an embodiment, a person wearing the wearable optics device 1510 can analyze game strategy, count cards, determine the score, do analysis (of game statistics), and analyze other player's faces utilizing an augmented reality overlay 1502 and facial recognition.

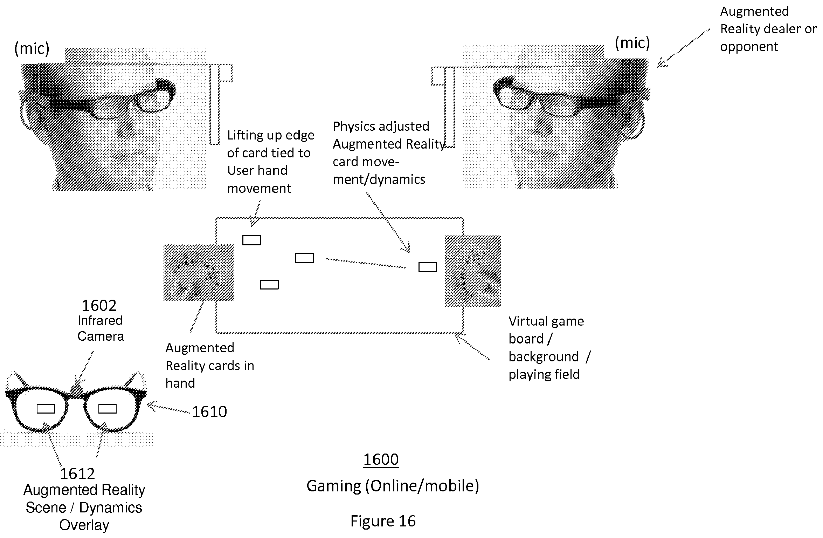

Figure 16 illustrates a first embodiment of an online/mobile gaming application 1600 utilized with the wearable optics device 1610. In this embodiment, information is transmitted via mobile, text, R2R, Internet, Wi-Fi, Facebook message, Twitter's tweet. The wearable optics device 1610 can utilize mobile, R2R, NFC, Wi-Fi, Internet to communicate.

The player and opponent have augmented reality cards in hand. Augmented reality playing cards are utilized. Because of the augmented reality and communication link the players need not be present in the same location. The AR cards may be lifted by hand movement. There is a physics adjusted augmented reality card movement and dynamics. In an embodiment there can be a virtual game board, a background, and a playing field.

There is an infrared camera 1602 on the glasses to measure and judge hand and finger position and movement. There is an augmented reality scene or dynamics overlay 1612 which can be seen on the lenses.

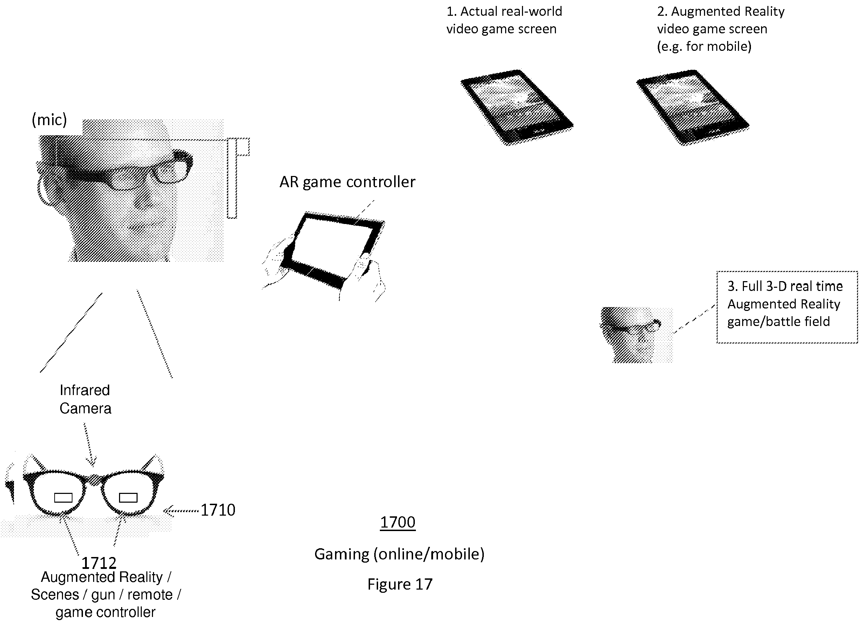

Figure 17 illustrates a second embodiment of an online/mobile gaming application 1700 utilized with the wearable optics device 1710. In this embodiment, information is transmitted via mobile, text, R2R, Internet, Wi-Fi, Facebook message, Twitter's tweet. The wearable optics device 1710 can utilize mobile, R2R, NFC, Wi-Fi, Internet to communicate.

The scene that the player sees can be an actual real-world video game screen. It could also be utilized as an augmented reality video game screen (e.g. for mobile). Furthermore it could also be utilized as a full 3-D real time Augmented Reality game/battle field which the player sees. The player can use an augmented reality game controller. There is an infrared camera on the glasses to measure and judge hand and finger position and movement on the AR game controller. Augmented reality scenes, AR game controller, AR gun, or AR remote control overlay 1712 are seen on the lenses of the glasses.

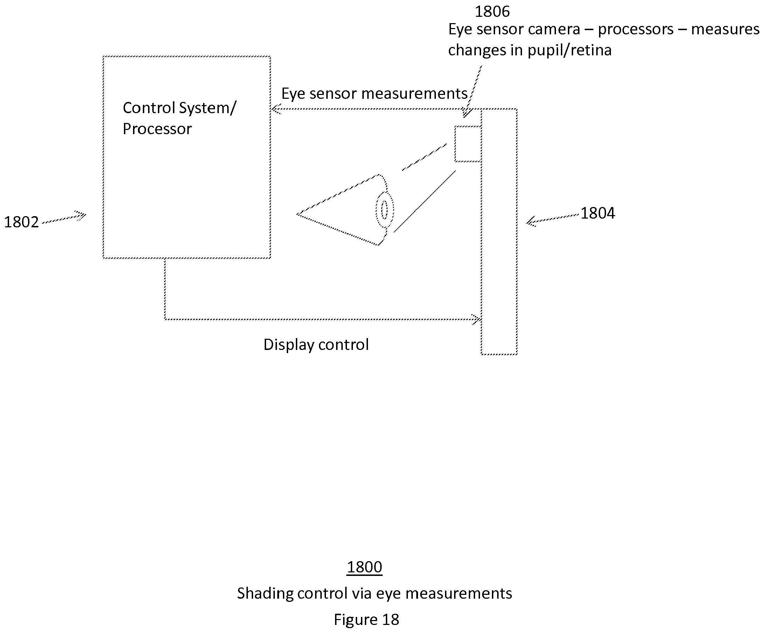

Figure 18 illustrates shading control mechanism utilizing the wearable optics device. In this embodiment there are one or more cameras 1806 that measures changes in the eye (for example the pupil or the retina) and sends the information to a processing system. Thereafter, the processing system 1802 can control a display on the lens 1804 to provide shading.

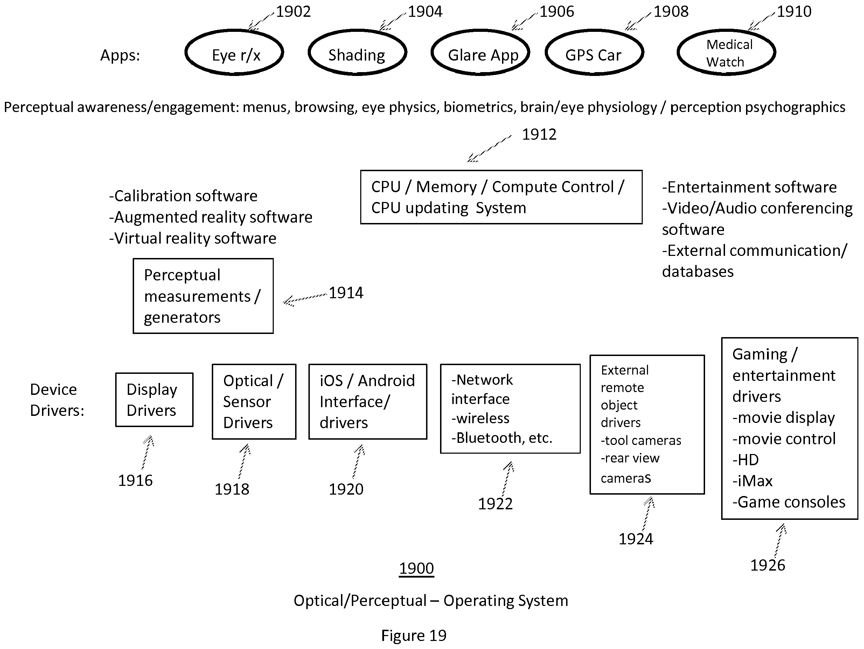

Figure 19 illustrates an optical/perceptual operating system 1900 with the wearable optics device. As is seen a plurality of applications 1902-1910 interface with a processing system. The processing system includes a CPU, Memory, computer control and a CPU updating system 1912.

The applications include but are not limited to an eye prescription 1902, shading 1904, a glare application, 1906, GPS for navigation of a vehicle 1908 and a medical application 1910. The system would include perceptual measurement/generators 1914. These would include but are not limited to calibration software, augmented reality software, entertainment software, video/audio conferencing software and external communication/databases. The system would also include one or more device drivers. They include but are not limited to display drivers 1916, optical/sensor drivers 1918, operating system drivers 1920, network drivers 1922, external remote object drivers 1924 and gaming/entertainment drivers 1926.

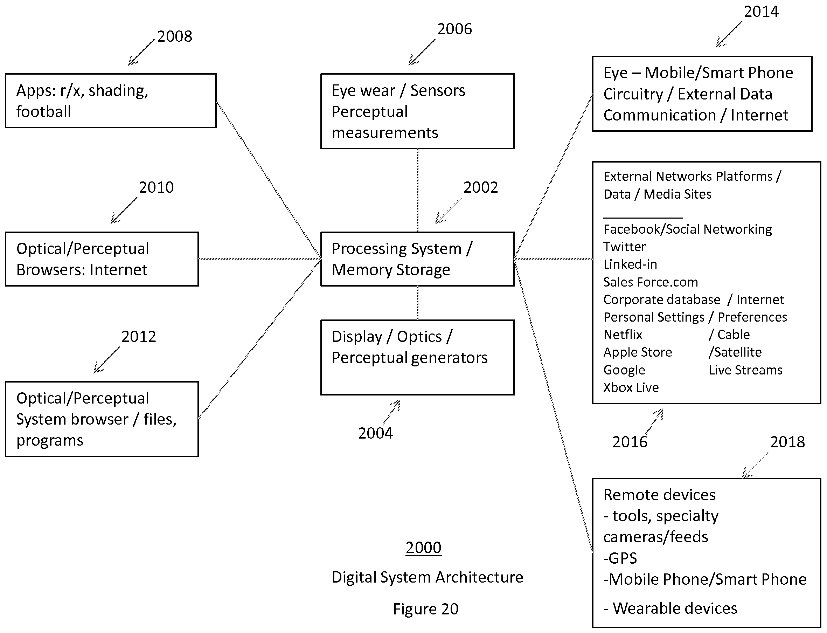

Figure 20 describes an embodiment of the digital architecture of a wearable optics device 2000. In this embodiment, the wearable optics device eyewear includes mobile/smart phone circuitry / external data communication / and circuitry for transmitting data via mobile, text, R2R, Internet, Wi-Fi, Facebook message, Twitter's tweet, along with networking to external networks platforms / data / media sites 2016 . The wearable optics contains a processing system 2002 with memory storage, sensors for optical and perceptual measurement 2006, circuitry to control the optical display and perceptual generation needs of the device 2004, and interface 2008 to remote devices such as tools, specialty camera, GPS, mobile phone, wearable devices and the like.

In this embodiment various types of application software ("apps") 2018 can be run on the wearable optics device 2000 including shading control applications, focus and user eye adjustment prescriptions, and augmented reality applications for games such as football. An Internet browser 2010 that utilizes optical or perceptual parameters to drive navigation of the Internet can be used such that eye movements or facial expressions can accelerate the browsing process to the desired information. The wearable optics device 2000 contains a system browser 2012 with file storage that can be on the device or accessed via one of the networks to the device.

The device 2000 can be powered by a separate battery (not shown). The battery can be charged via a connector, such as but not limited to an USB connector to a charging device laptop, tablet or desktop PC for example. In addition the device 200 could be solar powered either by solar cells being placed on the device 2000 or the solar cells could be placed on articles of clothing (i.e. hat, shirt or pants for example) to facilitate the charging thereof.

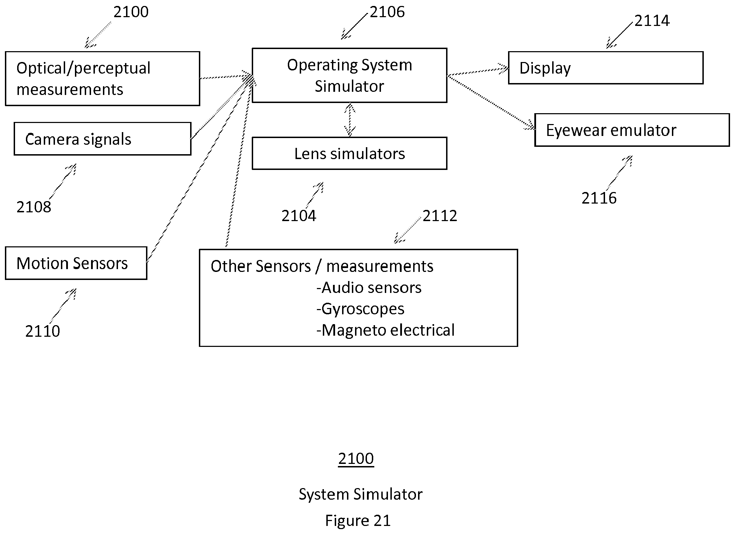

Figure 21 illustrates the embodiment of a system simulator 2100 for use by developers of applications and new lenses or expansion of the wearable optics device. In this embodiment, there is a simulator for the operating system 2102, a lens simulator 2104, a display 2114, and an eyewear emulator 2116. Optical/perceptual measurements 2106, camera signals, and other sensors and measurements are inputs to the simulator. The developer apps or new lenses can then be tested for various types of wearable options with various types of operating systems including iOS, Andriod, and general purpose or optimized optical/perceptual operating systems.

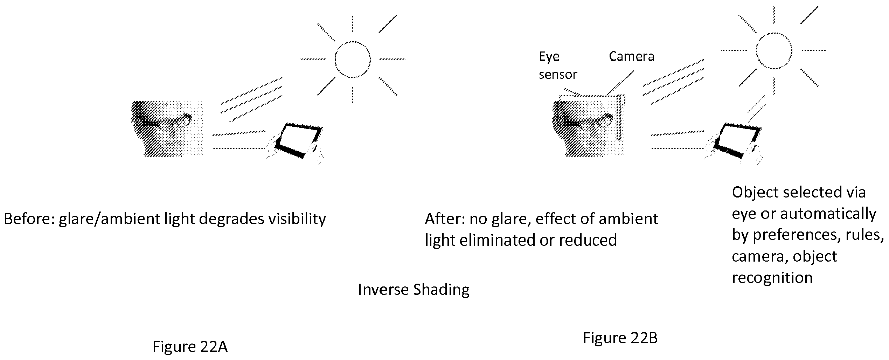

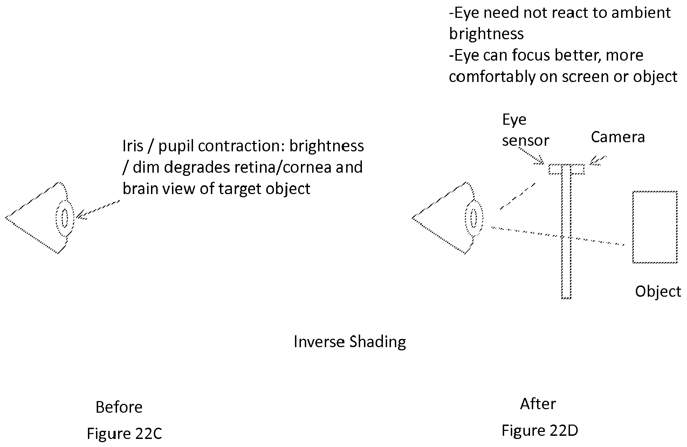

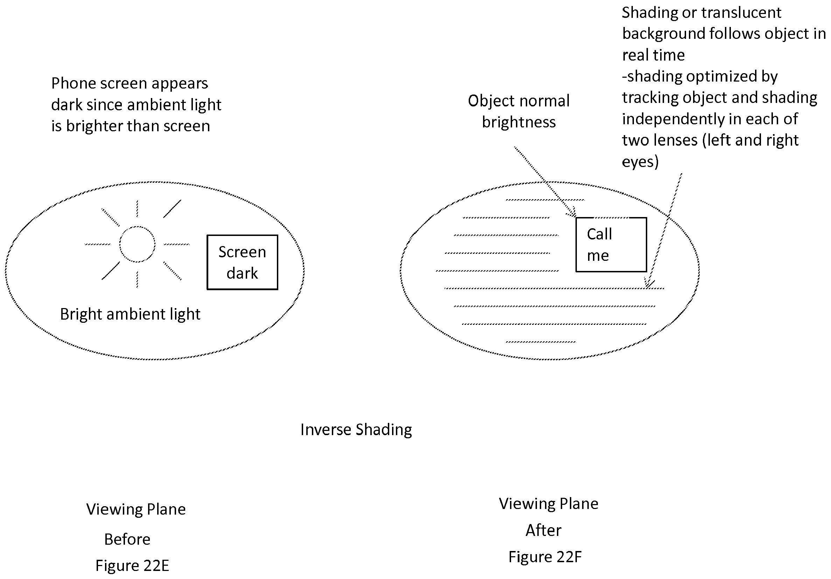

Figure 22A through Figure 22F illustrate an embodiment of inverse shading using the wearable optics device. Figure 22A illustrates the problem of glare caused by ambient light which degrades the visibility of a object such as the screen of a mobile phone or laptop. Figure 22C describes the iris / pupil contraction due to brightness which degrades retina/cornea and brain view of target object such as a phone screen or the like. In Figure 22E the phone screen appears dark since ambient light is far brighter than screen.

Figure 22B illustrates the selection of the target object as in a phone screen via eye or automatically by preferences, rules, camera image capture and object recognition. Figure 22D shows eye detection and capture of the object's position and image by a camera on the eyewear. Figure 22F shows the resulting elimination or reduction in glare and increase in visibility of the object wherein a shaded or translucent background follows surrounding area object in real time as seen from the user of the wearable optics device.

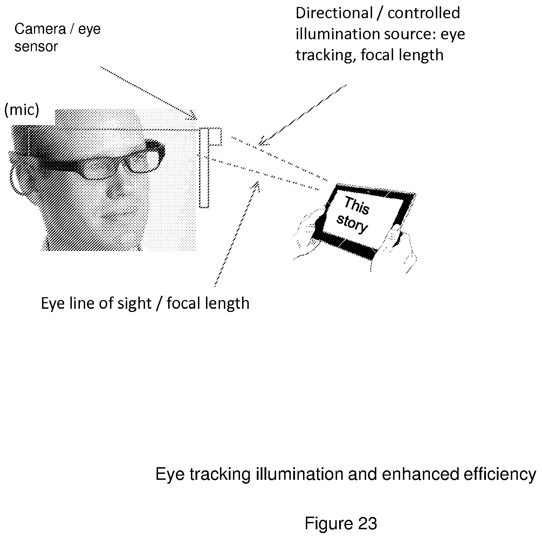

Figure 23 illustrates an embodiment of eye tracking illumination and enhanced efficiency utilizing the wearable optics device. Using the eye sensor and camera the line of sight and focal length can be determined and used to control a directional illumination source such that the illumination source illuminates the area corresponding to the area being focused on by the user of the wearable optics device

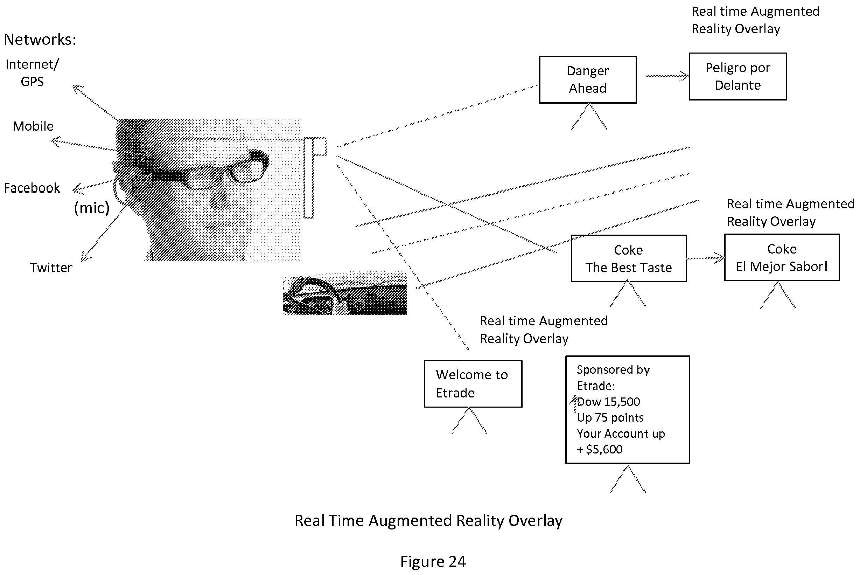

Figure 24 illustrates an embodiment of real-time augmented reality overlay 2400 utilizing the wearable optics device. In this embodiment, information is transmitted via mobile, text, R2R, Internet, Wi-Fi, Facebook message, Twitter's tweet. The wearable optics device can utilize mobile, R2R, NFC, Wi-Fi, Internet to communicate. In one example the wearable optics device is utilized in a vehicle. In this example the driver's eyewear uses augmented reality to overlay advertising signs which can be personalized to the user which appear as if they are normal roadside billboards. In this example a real-time updated augmented reality danger sign is posted before a road hazard with the augmented reality sign being generated in real-time using information from the networks connected to the wearable eyewear device. This example also shows real-time translation from English to Spanish of navigational warning and advertising signs using augmented reality with the wearable optics device.

Accordingly systems and methods in accordance with embodiments are disclosed that provide these enhanced features for wearable optics devices. To describe these features and embodiments in more detail refer now to the following description in conjunction with the following discussion. A key feature associated with these enhancements is providing a variety of perceptual parameters that can be utilized with the wearable optics devices. Examples of perceptual parameters include but are not limited to optical expression, voice, brain wave, environmental, audio, video, navigational, augmented reality, algorithmic, spatial, cognitive, interpretive.

Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the appended claims.

Aspects can be understood from the following numbered paragraphs:
1. A method comprising:
   utilizing dynamic eye tracking with a wearable optics device; wherein parameters personalized to a user can be provided based upon the dynamic eye tracking.
2. The method of clause 1 which includes providing an enhancement utilizing objective and subjective quality standards based upon perceptual parameters.
3. The method of clause 2, wherein the perceptual parameters include any and any combination of optical expression, voice, brain wave, environmental, audio, video, navigational, augmented reality, algorithmic, spatial, cognitive, interpretive.
4. The method of clause 2 wherein the wearable optics device controls any or any combination of mimics, amplifies, or expands a user perceptual physiology utilizing perceptual parameters.
5. The method of clause 4 wherein the optical expressions are images.
6. The method of clause 1, wherein the wearable optics device comprises one or more inserts into eyeglasses.
7. The method of clause 6, wherein the eyeglasses comprises quad state eyeglasses.
8. The method of clause 1, wherein shading control is utilized on the wearable optics device.
9. The method of clause 8, wherein the shading control is provided by one or more projectors within the wearable optics device.
10. The method of clause 9, wherein an occlusion effect is projected on a lens of the wearable optics device.
11. The method of clause 9, wherein shading is provided on a lens of the wearable optics device wherein the surrounding area is occluded or reversed.
12. The method of clause 9, wherein shading is provided by a polarized filter.
13. The method of clause 8, wherein the shading control is provided by the lenses within the wearable optics device.
14. The method of clause 13, wherein shading is provided on a lens of the wearable optics device wherein the surrounding area is occluded or reversed.
15. The methodof clause 13, wherein shading is provided by a polarized filter.
16. The method of clause 8 in which the shading is controlled using optical parameters.
17. The method of clause 16, wherein the optical parameters include any or any combination of ciliary, pupil, corneal, lens, iris, eye lid, retina measurements.
18. The method of clause 1, wherein materials that electrically control any or any combination of chromatic, refractive, diffractive, transparent, reflective properties of the wearable optics device are utilized with the dynamic eye tracking.
19. The method of clause 1, wherein the wearable optics device comprises any or any combination of transparent LCD, LED, OLED, flexible LED, flexible OLED, transparent matrix, semi-transparent matrix, prism based, holographic, electroluminescence, eletroreflective, dynamic filtering materials.
20. The method of clause 1, wherein the wearable optics device comprises an electrochromatic material.
21. The method of clause 1, wherein one or more elements are utilized within the wearable optics device to provide image information into the eye.
22. The method of clause 1, wherein the one or more elements include any or any combination of a lens projector, retinal projection
23. The method of clause 22, wherein the retinal projection provides the occlusion.
24. The method of clause 1, wherein the wearable optics device comprises an electro refractive or diffractive material.
25. The method of clause 1, wherein the wearable optics device includes shading control.
26. The method of clause 25, wherein portions of an image viewed by the wearable optics device are shaded to control brightness.
27. The method of clause 1, wherein wearable optics device comprises controlled refractive lenses.
28. The method of clause 1 wherein the wearable optics device comprises 25 polychromatic material.
29. The method of clause 1, wherein the parameters include any or any combination of prescriptions for improving the vision of a user, a zoom feature, a microscope feature, magnifying feature, retinal projection feature.
30. The method of clause 1, wherein the wearable optics device is utilized in a simulator.
31. The method of clause 1, wherein a focal of the wearable optics device is utilized in conjunction with the dynamic eye tracking.
32. The method of clause 1, wherein the parameters include any or any combination of a zoom feature, a microscope feature, magnifying feature, illumination feature; a retinal projection feature.
33. The method of clause 1, wherein a 360 degree view is provided.
34. The method of clause 33, wherein the 360 degree view can be any or any combination of a left or right panning, up and down panning , three dimensional rotations.
35. The method of clause 1, wherein an illumination feature is directed to a specific area based upon the dynamic eyetracking mechanism.
36. The method of clause 1, wherein the wearable optics device comprises lenses to filter certain light waves for controlled viewing or visual effects.
37. The method of clause 35, wherein the illumination feature comprises controlling noise reduction, polarization, creative effects.
38. The method of clause 35, wherein the illumination feature comprises controlling a stability control for facial or object focus.
39. The method of clause 35, wherein optical parameters are utilized.
40. The method of clause 39, wherein the optical parameters include any of or any combination of ciliary, pupil, corneal, retina, lens, iris measurements.
41. The method of clause 1, which includes detecting head movement.
42. The method of clause 1, wherein an acoustic wave mechanism is utilized 5 within the wearable optics device.
43. The method of clause 1, wherein a brain wave mechanism is utilized within the wearable optics device.
44. The method of clause 1, wherein a magnetic wave mechanism is utilized within the wearable optics device.
45. The method of clause 1, wherein the parameters can be transmitted to one or more third parties.
46. The method of clause 1, wherein the parameters are athletic information related to the user.
47. The method of clause 46, wherein optical parameters are utilized.
48. The method of clause 47, wherein the optical parameters include any or any combination of ciliary, pupil, corneal, retina, lens, iris measurements.
49. The method of clause 1 wherein the wearable optics device is utilized in 25 conjunction with an athletic event by a participant.
50. The method of clause 1 wherein the wearable optics device is utilized in conjunction with an athletic event by a spectator.
51. The method of clause 46, wherein the athletic information comprises training information for the user.
52. The method of clause 1, wherein the method utilizes one or more camera components and one or more communication components.
53. The method of clause 52, wherein the camera components utilizes any and 5 any combination of transparent LCD, LED, OLED, flexible LED, flexible OLED, transparent matrix, semi-transparent matrix, prism based, holographic , electroluminescence, eletroreflective, electrorefractive, dynamic filtering, refractive materials.
54. The method of clause 52, wherein the camera components utilizes filtering of certain light waves for controlled viewing or visual effects.
55. The method of clause 1, wherein the method utilizes one or more camera components and one or more communication components to provide an augmented reality.
56. The method of clause 55, wherein the parameters include a zoom feature on the one or more camera components to aid the user in the performance in an athletic event.
57. The method of clause 1, wherein the parameters are medical features related to the user.
58. The method of clause 57, wherein optical parameters are utilized.
59. The method of clause 58, wherein the optical parameters include any or any combination of ciliary, pupil, corneal, retina, lens, iris measurements.
60. The method of clause 1, wherein the parameters are dental features of a 30 patient.
61. The method of clause 60, wherein optical parameters are utilized.
62. The method of clause 61, wherein the optical parameters include any or any combination of ciliary, pupil, corneal, retina lens, iris measurements.
63. The method of clause 57, wherein the optical parameters are utilized to detect pain or other dental conditions.
64. The method of clause 60, wherein the dental features of the patient can be received by a dentist using the wearable optics to perform dental procedures on the 10 patient utilizing augmented reality.
65. The method of clause 1, in which any or any combination of light, acoustic waves, ultrasound x-rays or infrared are utilized with the dynamic eye tracking mechanism.
66. The method of clause 60, wherein the parameters include a zoom feature to aid the dentist in the performing the dental procedures.
67. The method of clause 66, wherein the dental procedures include any or any 20 combination of drilling a tooth, tooth extraction, teeth cleaning and root canal.
68. The method of clause 1, wherein sensory inputs are provided utilizing sensors.
69. The method of clause 68, wherein optical parameters are utilized.
70. The method of clause 69, wherein the optical parameters include any or any combination of ciliary, pupil, corneal, retina, lens, iris measurements.
71. The method of clause 68, wherein the sensors comprise any or any combination of gyroscopes, accelerometers, torque sensors, weight sensors, pressure sensors, magnetometers, temperature sensors, light sensor, cameras and microphones, GPS, wireless detection, altitude sensors, blood pressure , heart rate sensors, biometric sensors, radio frequency identification (RFID), near field communication (NFC),, mobile communication, Wi-Fi, strain gauges, fingerprint sensors, smell sensors gas sensors, chemical sensors, color sensors, sound sensors, acoustic sensors, ultraviolet sensors, electric field sensors, magnetic field 5 sensors, gravity sensors, wind speed sensors, wind direction sensors, compass sensors, geo-locator sensor, polarized light sensors, infrared emitter sensors.
72. The method of clause 64, wherein the sensors are coupled wirelessly.
73. The method of clause 72, wherein the sensors are coupled via a USB wireless connection.
74. The method of clause 72, wherein the sensors are coupled via a Bluetooth wireless connection.
75. The method of clause 71, wherein the sensor comprises an earpiece connected either by a wire, to a frame, or connected wirelessly
76. The method of clause 75, wherein the earpiece measures the ear muscles.
77. The method of clause 76, wherein the ear muscle measurement is utilized to adjust acoustic volume or acoustic focus.
78. The method of clause 76, wherein the sensor comprises a microphone either 25 connected by a wire, connected to frame, or connected wirelessly
79. The method of clause 78, wherein the microphone is used in combination with any or any combination of a camera, infrared camera, imaging sensors.
80. The method of clause 68, wherein the sensor comprises an earpiece containing a speaker that includes a microphone for noise cancellation.
81. The method of clause 1, wherein the method is implemented utilizing one or more distributed networks.
82. The method of clause 1, wherein an input/output (I/O) capability is integrated 5 with the wearable optic device.
83. The method of clause 82, wherein remote devices are utilized with the I/O capability.
84. The method of clause 1, wherein different media can be overlaid based upon the dynamic eye tracking.
85. The method of clause 1, wherein different media can be blended based upon the dynamic eye tracking.
86. The method of clause 1, which includes wireless inputs to the wearable optics device.
87. The method of clause 60, wherein the results of the dental procedures can be 20 transmitted to one or more third parties.
88. The method of clause 57, wherein the medical features comprises anatomical features of a patient.
89. The method of clause 88, wherein the anatomical features of the patient can be received by a medical doctor using the wearable optics to perform medical procedures on the patient utilizing augmented reality.
90. The method of clause 1, wherein the parameters include a zoom feature to aid 30 the medical doctor in performing the medical procedures.
91. The method of clause 90, wherein the medical procedures include surgical and/or diagnostic procedures.
92. The method of clause 91, wherein the results of the medical procedures can 5 be transmitted to one or more third parties.
93. The method of clause 1, wherein advertising is provided based upon the dynamic eye tracking.
94. The method of clause 93, wherein optical parameters are utilized.
95. The method of clause 94, wherein the optical parameters include any or any combination of ciliary, pupil, corneal, retina, lens, iris measurements.
96. The method of clause 93, wherein the advertising is advertising a product or service that is proximate to the user of the wearable optics device.
97. The method of clause 96, wherein an advertising target is determined by any of or any combination of eye movement, GPS, wireless location measurement, accelerometer, and gyroscope.
98. The method of clause 97, wherein the wearable optics device can view advertising to provide viewing information to a vendor.
99. The method of clause 93, wherein the advertising can appear to be on a billboard that is visible to a user of the wearable optics device.
100. The method of 1, wherein dynamic eye tracking is utilized to interface with a user application with the tablet, personal computer, portable device, mobile phone wearable sensors, wearable devices or the like.
101. The method of clause 100, wherein optical parameters are utilized.
102. The method of clause 101, wherein the optical parameters include any or any combination of ciliary, pupil, corneal, retina lens, iris measurements
103. The method of 1, wherein an application runs on a processor of the wearable optics device.
104. The method of clause 1, wherein the dynamic eye tracking utilizes movement of the pupils of the eye for navigation.
105. The method of clause 1, wherein the dynamic eye tracking is utilized to control an object.
106. The method of clause 1, wherein the dynamic eye tracking incorporates facial 15 recognition technology.
107. The method of clause 1, wherein the dynamic eye tracking incorporates object recognition technology.
108. The method of clause 1, wherein the dynamic eye tracking incorporates voice recognition technology.
109. The method of clause 1, wherein the wearable optics device comprises a plurality of lenses on eyeglasses.
110. The method of clause 109, wherein the plurality of lenses comprises controlled refractive lenses.
111. The method of clause 109, wherein the plurality of lenses comprising 30 polychromatic material.
112. The method of clause 109, wherein the plurality of lenses comprising any or any combination of refractive, diffractive material.
113. The method of clause 109, wherein the plurality of lenses comprising any or 5 any combination of transparent LCD, LED, OLED, flexible LED, flexible OLED, transparent matrix, semi-transparent matrix, prism based, holographic , electroluminescence, eletroreflective, dynamic filtering materials.
114. The method of clause 109, wherein the plurality of lenses comprise a single 10 integrated system.
115. The method of clause 109, wherein shading control is utilized on the plurality of lenses.
116. The method of clause 1, wherein the wearable optics device can view encoded images.
117. The method of clause 1, wherein the wearable optics device is utilized with a social networking application.
118. The method of clause 117, wherein optical parameters are utilized.
119. The method of clause 118, wherein the optical parameters include any or any combination of ciliary, pupil, corneal, retina, lens, iris measurements.
120. The method of clause 118, wherein the optical parameters are utilized to identify preferences including any or any combination of friends, company position, company background, relationship status, related parties.
121. The method of clause 118, wherein the optical parameters are utilized for navigation inside and outside the social networking application.
122. The method of clause 117, wherein the wearable optics device can view any or any combination of friends, linked-in related parties, followers by highlighting within a field of view.
123. The method of clause 122, wherein optical parameters are utilized.
124. The method of clause 131, wherein the optical parameters include any or any combination of ciliary, pupil, corneal, retina lens, iris measurements.
125. The method of clause 131, wherein eye tracking by the user is utilized to determine information about the target based upon optical parameters.
126. The method of clause 1, wherein the wearable optics device is utilized for infrared or motion detection.
127. The method of clause 1, wherein rapid motion encoding is utilized in conjunction with dynamic eye tracking.
128. The method of clause 1, wherein DVR functions are utilized in conjunction with 20 dynamic eye tracking.
129. The method of clause 128, wherein the DVR functions include any or any combination of play, pause, record and replay.
130. The method of clause 1, wherein the wearable optics device is utilized for dancing and fitness.
131. A wearable optics device comprising: a lens; and a dynamic eye tracking mechanism in communication with the lens; wherein parameters personalized to a user can be provided based upon the dynamic eye tracking.
132. The wearable optics device of clause 131 which includes providing an enhancement utilizing objective and subjective quality standards based upon perceptual parameters.
133. The wearable optics device of clause 132, wherein the perceptual parameters include any and any combination of optical expression, voice, brain wave, environmental, audio, video, navigational, augmented reality, algorithmic, spatial, cognitive, interpretive, facial gestures
134. The wearable optics device of clause 133, wherein the optical expressions are images.
135. The wearable optics device of clause 133, wherein the wearable optics device 15 controls any or any combination of mimics, amplifies, or expands a user perceptual physiology utilizing perceptual parameters.
136. The wearable optics device of clause 131, wherein the wearable optics device comprises one or more inserts into eyeglasses.
137. The wearable optics device of clause 136, wherein the eyeglasses comprises quad state eyeglasses.
138. The wearable optics device of clause 131, wherein shading control is utilized 25 on the lens.
139. The wearable optics device of clause 138 in which the shading is controlled using optical parameters.
140. The wearable optics device of clause 139, wherein the optical parameters include any or any combination of ciliary, pupil, corneal, retina, lens, iris measurements.
141. The wearable optics device of clause 139, wherein the lens comprises any or any combination of transparent LCD, LED, OLED, flexible LED, flexible OLED transparent matrix, semi-transparent matrix, prism based, holographic , electroluminescence, eletroreflective, dynamic filtering, refractive materials.
142. The wearable optics device of clause 139, wherein materials that electrically control any or any combination of chromatic, refractive, diffractive, transparent, reflective properties of the wearable optics device are utilized with the dynamic eye tracking.
143. The wearable optics device of clause 142, wherein the wearable optics device includes shading control.
144. The wearable optics device of clause 143 in which the shading is controlled using optical parameters.
145. The wearable optics device of clause 144, wherein the optical parameters include any or any combination of ciliary, pupil, corneal, retina, lens, iris measurements.
146. The wearable optics device of clause 143, wherein portions of an image viewed by the lens are shaded to minimize brightness.
147. The wearable optics device of clause 131, wherein lens comprises controlled refractive lenses.
148. The wearable optics device of clause 131, wherein the lens comprises polychromatic material.
149. The wearable optics device of clause 131, wherein the wearable optics device comprises an electrochromatic material.
150. The wearable optics device of clause 131, wherein one or more elements are utilized within the wearable optics device to provide image information into the eye.
151. The wearable optics device of clause 150, wherein the one or more elements include any or any combination of a lens projector, retinal projection.
152. The wearable optics device of clause 151, wherein shading, inverse shading, or occulsion is provided by the any or any combination of lens projector, retinal projection.
153. The wearable optics device of clause 131, wherein the wearable optics device comprises an electro refractive material.
154. The wearable optics device of clause 131, wherein the parameters include any of or any combination of prescriptions for improving the vision of a user, a zoom feature, a microscope feature, a retinal projection feature.
155. The wearable optics device of clause 154, wherein optical parameters are 20 utilized.
156. The wearable optics device of clause 155, wherein the optical parameters include any or any combination of ciliary, pupil, corneal, retina, lens, iris measurements.
157. The wearable optics device of clause 131, wherein the parameters include any or any combination of a zoom feature, a microscope feature, magnifying feature, illumination feature; a retinal projection feature.
158. The wearable optics device of clause 157, wherein an illumination feature is directed to a specific area based upon the dynamic eyetracking.
159. The wearable optics device of clause 131, wherein the wearable optics device is utilized in a simulator.
160. The wearable optics device of clause 131, where in the focal point of the user 5 of the wearable optics device is utilized in conjunction with the dynamic eye tracking.
161. The wearable optics device of clause 131, wherein the parameters include any or any combination of a zoom feature, a microscope feature, magnifying feature, illumination feature; a projector feature, a retinal projection feature.
162. The wearable optics device of clause 131, wherein a 360 degree view is provided.
163. The wearable optics device of clause 162, wherein the 360 degree view can be any or any combination of a left or right panning, up and down panning ,three dimensional rotation.
164. The wearable optics device of clause 131, wherein an illumination feature is directed to a specific area based upon the dynamic eyetracking mechanism.
165. The wearable optics device of clause 131, wherein filtering for certain light waves for controlled viewing or visual effects.
166. The wearable optics device of clause 165, wherein the filtering comprises controlling the illumination noise reduction, polarization, and creative effects.
167. The wearable optics device of clause 131, which comprises a stability control for facial or object focus.
168. The wearable optics device of clause 131, wherein an acoustic wave mechanism is utilized within the wearable optics device.
169. The wearable optics device of clause 131, wherein a brain wave mechanism is utilized within the wearable optics device.
170. The wearable optics device of clause 131, wherein a magnetic wave mechanism is utilized within the wearable optics device.
171. The wearable optics device of clause 131, wherein the parameters can be transmitted to one or more third parties.
172. The wearable optics device of clause 131, wherein the parameters are athletic information related to the user.
173. The wearable optics device of clause 172, wherein optical parameters are 15 utilized.
174. The wearable optics device of clause 173, wherein the optical parameters include any or any combination of ciliary, pupil, corneal, retina, lens, iris measurements.
175. The wearable optics device of clause 131, wherein the one or more camera components and one or more communication components are utilized.
176. The wearable optics device of clause 175, wherein the camera component 25 utilizes any and any combination of transparent LCD, LED, OLED, flexible LED, flexible OLED, transparent matrix, semi-transparent matrix, prism based, holographic , electroluminescence, eletroreflective, dynamic filtering, refractive materials.
177. The wearable optics device of clause 131, wherein the wearable optics device is utilized in conjunction with an athletic event by a participant.
178. The wearable optics device of clause 131, wherein the wearable optics device is utilized in conjunction with an athletic event by a spectator.
179. The wearable optics device of clause 131 includes a camera component, communication components to provide an augmented reality.
180. The wearable optics device of clause 179, wherein the parameters include a zoom feature on the camera component to aid the user in the performance in an athletic event.
181. The wearable optics device of clause 131, wherein the parameters are medical features related to the user.
182. The wearable optics device of clause 131, wherein the parameters are dental features of a patient.
183. The wearable optics device of clause 182, wherein optical parameters are utilized.
184. The wearable optics device of clause 183, wherein the optical parameters include any or any combination of ciliary, pupil, corneal, retina, lens, iris measurements.
185. The wearable optics device of clause 183, wherein the optical parameters are 25 utilized to detect pain or other dental conditions.
186. The wearable optics device of clause 182, wherein the dental features of the patient can be received by a dentist using the wearable optics to perform dental procedures on the patient utilizing augmented reality.
187. The wearable optics device of clause 131, in which any or any combination of light, ultrasound, x-rays, acoustic or infrared are utilized with the dynamic eye tracking mechanism.
188. The wearable optics device of clause 182, wherein the parameters include a zoom feature to aid the dentist in the performing the dental procedures.
189. The wearable optics device of clause 183, wherein the dental procedures include any or any combination of drilling a tooth, tooth extraction, teeth cleaning and root canal.
190. The wearable optics device of clause 131, wherein sensors are utilized to provide sensory inputs to the device.
191. The wearable optics device of clause 190, wherein the sensors are coupled wirelessly.
192. The wearable optics device of clause 190, wherein the sensors are coupled via a USB wireless connection.
193. The wearable optics device of clause 190, wherein the sensors are coupled via a Bluetooth wireless connection.
194. The wearable optics device of clause 190, wherein the sensors comprise any 25 or any combination of gyroscopes, accelerometers, pressure sensors, torque sensors, weight sensors, magnetometers, temperature sensors, light sensor, cameras and microphones, GPS, wireless detection, altitude sensors, blood pressure , heart rate sensors, biometric sensors, radio frequency identification (RFID), near field communication (NFC), mobile communication, Wi-Fi, strain 30 gauges, fingerprint sensors, smell sensors gas sensors, chemical sensors, color sensors, sound sensors, acoustic sensors, ultraviolet sensors, electric field sensors, magnetic field sensors, gravity sensors, wind speed sensors, wind direction sensors, compass sensors, geo-locator sensor, polarized light sensors, infrared emitter sensors.
195. The wearable optics device of clause 194, wherein the sensor comprises an 5 earpiece connected either by a wire, to a frame, or connected wirelessly.
196. The wearable optics device of clause 195, wherein the earpiece measures the ear muscles.
197. The wearable optics device of clause 196, wherein the ear muscle measurement is utilized to adjust acoustic volume or acoustic focus.
198. The wearable optics device of clause 194, wherein the sensor comprises a microphone either connected by a wire, connected to frame, or connected wirelessly
199. The wearable optics device of clause 198, wherein the microphone is used in combination with any or any combination of a camera, infrared camera, imaging sensors.
200. The wearable optics device of clause 194, wherein the sensor comprises an earpiece containing a speaker that includes a microphone for noise cancellation.
201. The wearable optics device of clause 131, wherein one or more distributed 25 networks are utilized by the wearable optics device.
202. The wearable optics device of clause 131 includes an input/output (I/O) capability integrated with the wearable optics device.
203. The wearable optics device of clause 202, wherein remote devices are utilized with the I/O capability.
204. The wearable optics device of clause 131, wherein different media can be overlaid based upon the dynamic eye tracking mechanism.
205. The wearable optics device of clause 131, wherein different media can be 5 blended based upon the eye tracking mechanism.
206. The wearable optics device of clause 205 includes wireless inputs.
207. The wearable optics device of clause 182, wherein the results of the dental 10 procedures can be transmitted to one or more third parties.
208. The wearable optics device of clause 181, wherein the medical features comprises anatomical features of a patient.
209. The wearable optics device of clause 208, wherein the anatomical features of the patient can be received by a medical doctor using the wearable optics to perform medical procedures on the patient utilizing augmented reality.
210. The wearable optics device of clause 131, wherein the parameters include a 20 zoom feature to aid the medical doctor in performing the medical procedures.
211. The wearable optics device of clause 210, wherein the medical procedures include surgical and/or diagnostic procedures.
212. The wearable optics device of clause 210, wherein the results of the medical procedures can be transmitted to one or more third parties.
213. The wearable optics device of clause 131, wherein advertising is provided based upon the eye tracking mechanism.
214. The wearable optics device of clause 131, wherein an advertising target is determined by any of or any combination of eye movement, GPS, wireless location measurement and gyroscope.
215. The wearable optics device of clause 131, wherein advertising is provided based upon user parameters.
216. The wearable optics device of clause 215, wherein a product or service is advertised that is proximate to the user of the wearable optics device.
217. The wearable optics device of clause 215, wherein the wearable optics device can view advertising to provide viewing information to a vendor.
218. The wearable optics device of clause 215, wherein the advertising can appear is to be on a billboard that is visible to a user of the wearable optics device.
219. The wearable optics device of 131, wherein the dynamic eye tracking mechanism is utilized to interface with a user application with the tablet, portable device cell phone or the like.
220. The wearable optics device of 131, wherein the application runs on the processor of the wearable optics.
221. The wearable optics device of clause 131, wherein dynamic eye tracking 25 mechanism utilizes movement of the pupils of the eye for navigation.
222. The wearable optics device of clause 131, wherein the dynamic eye tracking mechanism is utilized to control an object.
223. The wearable optics device of clause 131, wherein the dynamic eye tracking mechanism incorporates facial recognition technology.
224. The wearable optics device of clause 131, wherein the dynamic eye tracking mechanism incorporates object recognition technology.
225. The wearable optics device of clause 131, wherein the dynamic eye tracking 5 mechanism incorporates voice recognition technology.
226. The wearable optics device of clause 131 includes eyewear, wherein the eyewear comprises a plurality of lenses.
227. The wearable optics device of clause 226, wherein the plurality of lenses comprises controlled refractive lenses.
228. The wearable optics device of clause 226, wherein the plurality of lenses comprising any one or any combination of polychromatic or electrochromatic is material.
229. The wearable optics device of clause 226, wherein the plurality of lenses comprising any combination of refractive or diffractive material.
230. The wearable optics device of clause 226, wherein the plurality of lenses comprising any or any combination of transparent LCD, LED, OLED, flexible LED, flexible OLED materials transparent matrix, semi-transparent matrix, prism based, holographic, electroluminescence, eletroreflective, refractive, dynamic filtering.
231. The wearable optics device of clause 226, wherein the plurality of lenses are a single integrated system.
232. The wearable optics device of clause 226, wherein shading control is utilized on the plurality of lenses.
233. The wearable optics device of clause 131, wherein the wearable optics device can view encoded media.
234. The wearable optics device of clause 131, wherein the wearable optics device is utilized with a social networking application.
235. The wearable optics device of clause 234, wherein optical parameters are utilized.
236. The wearable optics device of clause 235, wherein the optical parameters include any or any combination of ciliary, pupil, corneal, retina, lens, iris measurements.
237. The method of clause 235, wherein the wearable optics device can view any or any combination of friends, linked-in related parties, followers by highlighting within a field of view.
238. The wearable optics device of clause 172, wherein the athletic information can be related to any of track, skiing, baseball, football, tennis, basketball, and golf.
239. The wearable optics device of clause 238, wherein in football an intended 20 target is highlighted.
240. The wearable optics device of clause 239, wherein a particular characteristic of a player is highlighted.
241. The wearable optics device of clause 239, wherein augmented reality is provided remotely.
242. The wearable optics device of clause 239, wherein an Identification of geometry of the field such as first down, goal line is provided.
243. The wearable optics device of clause 239, wherein each player is identified.
244. The wearable optics device of clause 239, wherein possession of the football is identified.
245. The wearable optics device of clause 238, wherein a skier utilizing the wearable 5 optics device has access to skiing information; which includes any of or any combination of speed and location of other skiers, altitude, and topographic features of the terrain.
246. The wearable optics device of clause 238, wherein in baseball an intended 10 target is highlighted.
247. The wearable optics device of clause 246, wherein a particular characteristic of a player is highlighted.
248. The wearable optics device of clause 246, wherein augmented reality is provided remotely.
249. The wearable optics device of clause 246, wherein an Identification of geometry of the field such as field size, strike zone and location of stands is provided.
250. The wearable optics device of clause 246, wherein each player is identified.
251. The wearable optics device of clause 131, wherein the wearable optics device can be utilized as binocular glasses.
252. The wearable optics device of clause 251, wherein an object to be enlarged is identified by eye movement.
253. The wearable optics device of clause 251, wherein in zoom mode the object is 30 followed based upon the dynamic eye tracking.
254. The wearable optics device of clause 251, wherein in zoom mode the object is stabilized.
255. The wearable optics device of clause 238, wherein the golf information includes any or any combination of club choice, topology, wind measurements, and club angles.
256. The wearable optics device of clause 131, wherein the parameters are related to information for the user.
257. The wearable optics device of clause 256, wherein the user is law enforcement personnel.
258. The wearable optics device of clause 257, wherein the information is related to is use of a firearm.
259. The wearable optics device of clause 258, wherein the information includes any or any combination of range finder information, wind measurements, and wind adjustments.
260. The wearable optics device of clause 131, wherein the user is firefighting personnel.
261. The wearable optics device of clause 260, wherein the information is related to 25 use of firefighting equipment.
262. The wearable optics device of clause 260, wherein the information includes GPS information regarding the location of a fire.
263. The wearable optics device of clause 260, wherein the information is retrieved from a database.
264. The wearable optics device of clause 263, wherein the information comprises any of or any combination of maps, architectural drawings and wiring schematics.
265. The wearable optics device of clause 260, wherein the firefighting personnel 5 utilizes augmented reality.
266. The wearable optics device of clause 131, wherein the user is military personnel.
267. The wearable optics device of clause 266, wherein the information is related to use of a firearm.
268. The wearable optics device of clause 267, wherein the information includes any or any combination of range finder information, wind measurements, and wind is adjustments.
269. The wearable optics device of clause 268, wherein the information is retrieved from a database.
270. The wearable optics device of clause 269, wherein the information comprises any of or any combination of maps, architectural drawings and wiring schematics.
271. The wearable optics device of clause 266, wherein the military personnel utilizes augmented reality.
272. The wearable optics device of clause 131, wherein the user is security personnel.
273. The wearable optics device of clause 131, wherein advertising is provided 30 utilizing any or any combination of GPS, cellular or other location based system.
274. The wearable optics device of clause 131, wherein advertising is provide utilizing any or any combination of a map database and a building database.
275. The wearable optics device of clause 131, wherein augmented reality is 5 utilized based on location.
276. The wearable optics device of clause 131, wherein augmented reality is utilized based on demographics.
277. The wearable optics device of clause 131, wherein augmented reality is utilized based on location condition.
278. The wearable optics device of clause 131, wherein the dynamic eye tracking mechanism is utilized to control properties of an object.
279. The wearable optics device of clause 131, wherein the dynamic eye tracking mechanism is utilized in conjunction with radio frequency systems to control properties of the object.
280. The wearable optics device of clause 131, wherein the dynamic eye tracking mechanism is utilized in conjunction with wireless systems to control properties of the object.
281. The wearable optics device of clause 131, wherein the dynamic eye tracking 25 mechanism is utilized for object recognition.
282. The wearable optics device of clause 281, wherein the properties of the object are stored in a database.
283. The wearable optics device of clause 131, wherein the dynamic eye tracking mechanism incorporates facial recognition technology.
284. The wearable optics device of clause 131, wherein audio wave technology is utilized in conjunction with the dynamic eye tracking mechanism.
285. The wearable optics device of clause 284, wherein the audio wave technology 5 includes audio focus.
286. The wearable optics device of clause 285, wherein the audio wave technology includes noise cancellation.
287. The wearable optics device of clause 286, wherein the noise cancellation is selective.
288. The wearable optics device of clause 287, wherein the selectivity is such that other noises are blocked out.
289. The wearable optics device of clause 287, wherein the selectivity is utilized in conjunction with a real life application.
290. The wearable optics device of clause 287, wherein the selectivity is such that 20 audio mixing control is provided.
291. The wearable optics device of clause 287, wherein the selectivity is such that sourced audio and ambient audio are controlled to produce the effects.
292. The wearable optics device of clause 286, wherein the noise cancellation provides for the cancellation of certain ranges of sounds.
293. The wearable optics device of clause 286, wherein the noise cancellation provides for the cancellation of certain sources of sounds.
294. The wearable optics device of clause 286, wherein the noise cancellation is based upon the dynamic eye tracking.
295. The wearable optics device of clause 286, wherein there are classes of noise cancellation.
296. The wearable optics device of clause 286, wherein non-object sound is cancelled or reduced.
297. The wearable optics device of clause 286, wherein a person is selected utilizing eye tracking and the sounds form nonselected individuals are cancelled.
298. The wearable optics device of clause 286, wherein a speaker and microphone are connected to devices on the outer ear or the inner ear on the frames.
299. The wearable optics device of clause 286, wherein a head band is utilized to is hold the speaker and microphone.
300. The wearable optics device of clause 284, wherein the audio wave technology includes voice recognition.
301. The wearable optics device of clause 284, wherein the audio wave technology includes utilizing a vibration detection mechanism.
302. The wearable optics device of clause 301, wherein the vibration detection mechanism is utilized for warning.
303. The wearable optics device of clause 301, wherein the vibration detection mechanism includes any and any combination of bone conduction of the jaw, skull, outer ear, and inner ear.
304. The wearable optics device of clause 284, wherein vibration is utilized to enhance the use of the media.
305. The wearable optics device of clause 284, wherein vibration can provide a high quality perception of sounds.
306. The wearable optics device of clause 284, wherein vibration can be utilized 5 with augmented reality.
307. The wearable optics device of clause 131, wherein facial movement is utilized in conjunction with the dynamic eye tracking mechanism.
308. The wearable optics device of clause 131, wherein a physical display appears as a blurry screen to anyone not using the wearable optics device.
309. The wearable optics device of clause 131, wherein social media features are 15 utilized in conjunction with the dynamic eye tracking mechanism.
310. The wearable optics device of clause 309, wherein the social media features include eye contact messaging.
311. The wearable optics device of clause 309, wherein the social media features include real time communication, including any or any combination of texting, instant messaging, video conferencing, twitter.
312. The wearable optics device of clause 131, wherein virtual reading features are 25 provided based upon the dynamic eye tracking mechanism.
313. The wearable optics device of clause 312, wherein zoom control is provided.
314. The wearable optics device of clause 131, wherein 360 degree viewing of media for information is provided based upon the dynamic eye tracking mechanism.
315. The wearable optics device of clause 131, wherein virtual reality is provided based upon the dynamic eye tracking mechanism.
316. The wearable optics device of clause 131 includes an augmented reality keyboard display.
317. The wearable optics device of clause 131 includes an augmented reality mouse or pointing device.
318. The wearable optics device of clause 316, wherein the augmented reality keyboard display can be utilized for any or any combination of a laptop, personal computer, mobile phone, tablet computer.
319. The wearable optics device of clause 131, wherein the augmented reality display can be utilized in conjunction with a point of sale device.
320. The wearable optics device of clause 319, wherein the augmented reality display can be utilized in conjunction with RFID or NFC communication.
321. The wearable optics device of clause 316, wherein the augmented reality display can be utilized in conjunction with online or mobile purchasing.
322. The wearable optics device of clause 321, wherein the augmented reality display can be utilized in conjunction with RFID or NFC communication.
323. The wearable optics device of clause 131, wherein navigation is utilized in conjunction with the dynamic eye tracking mechanism.
324. The wearable optics device of clause 131, wherein augmented reality GPS is 30 utilized in conjunction with the dynamic eye tracking mechanism.
325. The wearable optics device of clause 131, wherein video conferencing is utilized in conjunction with the dynamic eye tracking mechanism.
326. The wearable optics device of clause 131, wherein audio conferencing is 5 utilized in conjunction with the dynamic eye tracking mechanism.
327. The wearable optics device of clause 326, wherein the audio conferencing utilizes any or any combination of a caller ID name, telephone number or picture.
328. The wearable optics device of clause 326, wherein multiple callers are represented by any or any combination any or any combination of a caller ID name, telephone number or picture.
329. The wearable optics device of clause 326, wherein an identified caller is more is audible than other of the multiple callers.
330. The wearable optics device of clause 131, wherein tools are utilized in conjunction with the dynamic eye tracking mechanism.
331. The wearable optics device of clause 330, wherein the tools can be utilized with remote sensors.
332. The wearable optics device of clause 331, wherein at least one of the remote sensors is a camera.
333. The wearable optics device of clause 330, wherein the tools are utilized with augmented reality mechanisms.
334. The wearable optics device of clause 131, wherein augmented lip reading 30 technology is utilized.
335. The wearable optics device of clause 131, wherein language translation is utilized in conjunction with the dynamic eye tracking mechanism.
336. The wearable optics device of clause 335, wherein an overlay translation is 5 utilized in an advertising media.
337. The wearable optics device of clause 324, wherein an overlay translation is translation overlay for street signs.
338. The wearable optics device of clause 324, wherein an overlay translation is an augmented reality overlay.
339. The wearable optics device of clause 324, wherein an overlay translation is provided in the wearable optics device using line of sight or focal length of the lens of the user to the object to provide an augmented reality overlay.
340. The wearable optics device of clause 131, wherein the wearable optics device is utilized to determine what the user is watching at any particular point.
341. The wearable optics device of clause 131, wherein the wearable optics device 20 is utilized to determine what the user is viewing.
342. The wearable optics device of clause 131, wherein the wearable optics device is utilized to determine engagement with the media.
343. The wearable optics device of clause 131, wherein the wearable optics device is utilized in a gaming environment.
344. The wearable optics device of clause 343, wherein the gaming environment is utilized with augmented reality.
345. The wearable optics device of clause 345, wherein the gaming environment is online or mobile.
346. The wearable optics device of clause 345, wherein the wearable optics device determines statistics by referring to card analysis.
347. The wearable optics device of clause 345, wherein the wearable optics analyzes a person's facial expressions.
348. The wearable optics device of clause 345, wherein the wearable optics device is utilized in gambling; wherein gambling includes any or any combination of combination of slots, lotteries, sports betting, poker, and roulette.
349. The wearable optics device of clause 348, wherein optical parameters are utilized.
350. The wearable optics device of clause 349, wherein the optical parameters include any or any combination of ciliary, pupil, corneal, retina, lens, iris measurements.
351. The wearable optics device of clause 349 wherein the optical parameters are 20 utilized to assist in determining strategy based upon viewing other participants.
352. The wearable optics device of clause 131, wherein the wearable optics device is utilized in online or mobile environments.
353. The wearable optics device of clause 352, wherein media is incorporated to augment the experience.
354. The wearable optics device of clause 131, wherein the wearable optics device is utilized for illumination.
355. The wearable optics device of clause 354, wherein the illumination is controlled by any or any combination of automatically, manually, via eye control, voice control.
356. The wearable optics device of clause 131, wherein the wearable optics device is utilized for mobile payments.
357. The wearable optics device of clause 356, wherein the mobile payments are controlled by any or any combination of automatically, manually, via eye control, via voice control.
358. The wearable optics device of clause 131, wherein the wearable optics device is utilized for identity and security information.
359. The wearable optics device of clause 358, wherein optical parameters are utilized.
360. The wearable optics device of clause 359, wherein the optical parameters include any or any combination of ciliary, pupil, corneal, retina, lens, iris measurements.
361. The wearable optics device of clause 358, wherein the identity and security information is controlled by any or any combination of automatically manually, eye scan, brain wave, facial recognition, fingerprint scan, voice scan.
362. The wearable optics device of clause 131, wherein the wearable optics device is utilized as a teleprompter.
363. The wearable optics device of clause 131, wherein the wearable optics device 30 is utilized for infrared or motion detection.The wearable optics device of clause 131, wherein the wearable optics device is utilized in conjunction with demographic information.
364. The wearable optics device of clause 364, wherein the demographic 5 information is utilized with any one or combination of online media, web mobile, physical, radio advertising, television.
365. The wearable optics device of clause 364, wherein the demographic information is gathered based upon the channel being watched or the position that is viewed on a display by the user.
366. The wearable optics device of clause 131, wherein the wearable optics device is utilized in conjunction with an augmented reality remote control for media selection.
367. The wearable optics device of clause 131, wherein the wearable optics device is utilized in conjunction with remote sensors that acts as a periscope for the user.
368. The wearable optics device of clause 368, wherein the periscope is utilized in 20 an extended camera and microphone arrangement.
369. The wearable optics device of clause 131, wherein the wearable optics device includes stereoscopic lens.
371. The wearable optics device of clause 131, wherein lens are in a transparent mode.
372. The wearable optics device of clause 131, wherein the wearable optics device is utilized with a form filling pointing device.
373. The wearable optics device of clause 131, wherein the eye position is utilized to enable the wearable optics device.
374. The wearable optics device of clause 131, wherein passwords are utilized in conjunction with user names to enable the wearable optics device.
375. The wearable optics device of clause 131, wherein the wearable optics device creates vibrations around glasses.
376. The wearable optics device of clause 131, wherein the wearable optics device creates a vibration area around a frame worn by the user's face.
377. The wearable optics device of clause 131, wherein the wearable optics device is utilized with any of a visor, helmet, facemask, safety goggles.
378. The wearable optics device of clause 131, wherein the wearable optics device 15 is utilized for glare management.
379. The wearable optics device of clause 378, wherein the wearable optics device utilizes dimming reduction in brightness which can be utilized to improve any combination headlights, sun, spotlights or explosions.
380. The wearable optics device of clause 131, wherein at least one fingerprint utilized to enable the wearable optics device.
381. The wearable optics device of clause 131, wherein the wearable optics device 25 is utilized with multiple windows surrounding the user.
382. The wearable optics device of clause 381, wherein the multiple windows are controlled by eye movement.
383. The wearable optics device of clause 382, wherein owl vision is utilized to provide a 360 view.
384. The wearable optics device of clause 131, wherein the wearable optics device is utilized to identify who is actually speaking..
385. The wearable optics device of clause 131, wherein the wearable optics device 5 includes conference calling features.
386. The wearable optics device of clause 131, wherein the wearable optics device is utilized for messaging.
387. The wearable optics device of clause 386, wherein the messaging includes messaging based on line of sight or based upon facial and voice recognition.
388. The wearable optics device of clause 131, wherein the wearable optics are utilized in conjunction with social networks or external databases to identify characteristics of those or that which is viewed by the user.
389. The wearable optics device of clause 131, wherein the wearable optics device is utilized in conjunction with movies.
390. The wearable optics device of clause 389, wherein the movies include any of online mobile movies or physical movies.
391. The wearable optics device of clause 389, wherein the movies include any of a 3D or IMAX movie.
392. The wearable optics device of clause 131, wherein the wearable optics device is utilized for the purchase of songs music or games, movies and video games.
393. The wearable optics device of clause 392, wherein the games comprise word 30 games.
394. The wearable optics device of clause 392, wherein the games comprise any of chess, checkers solitaire and tic tac toe.
395. The wearable optics device of clause 392, wherein the games comprise 5 games based upon physics.
396. The wearable optics device of clause 131, wherein the wearable optics device is utilized with compensation algorithms in conjunction with a curved lens.
397. The wearable optics device of clause 396, wherein the curved lens used to create a spatially or visually mapped perspective for the user
398. The wearable optics device of clause 396, wherein the curved lens is used to create a panoramic viewing area utilizing multiple lenses.
399. The wearable optics device of clause 396, wherein the curved lens is used to create a 360 degree viewing area.
400. The wearable optics device of clause 131, wherein the wearable optics device 20 is utilized in conjunction with eye tests, eye diagnosis and eye exam.
401. The wearable optics device of clause 131, wherein optical parameters are utilized.
402. The wearable optics device of clause 401, wherein the optical parameters include any or any combination of ciliary, pupil, corneal, retina, lens, iris measurements.
403. The wearable optics device of clause 400, wherein the eye test comprises controlled cornea or eye lens measurement to eye muscles or muscles on the side of the face or its equivalent.
404. The wearable optics device of clause 4001, wherein the wearable optics device is utilized to control light through to iris or pupil detection.
405. The wearable optics device of clause 400, wherein the wearable optics device 5 is utilized for macular detection.
406. The wearable optics device of clause 131, wherein the wearable optics device utilizes sound detection to improve audibility.
407. The wearable optics device of clause 131, wherein the wearable optics device is utilized in conjunction with an ear insert for acoustic processing.
408. The wearable optics device of clause 131, wherein the wearable optics device comprises a contact lens with shading control.
409. The wearable optics device of clause 131, wherein the wearable optics device is utilized to determine symptoms of sleep deprivation.
410. The wearable optics device of clause 131, wherein the wearable optics device 20 is utilized to determine alcohol level of the user.
411. The wearable optics device of clause 131, wherein the wearable optics device is utilized in conjunction with a brain wave meter.
412. The wearable optics device of clause 131, wherein the wearable optics device is utilized in conjunction with a tesla meter.
413. The wearable optics device of clause 131, wherein the wearable optics device is utilized in conjunction with an operating system.
414. The wearable optics system of clause 413, wherein the dynamic eye tracking is utilized to control the operating the system.
415. The wearable optics system of clause 413, wherein applications are utilized to control sensors and the communication of the wearable optics device.
416. The wearable optics system of clause 414, wherein lenses are controlled by the operating system.
417. The wearable optics device of clause 416, wherein the lens includes a plurality of layers.
418. The wearable optics system of clause 413, wherein lens drivers and an eye cursor are controlled by the operating system.
419. The wearable optics device of clause 131, wherein the wearable optics device 15 is utilized in an educational environment.
420. The wearable optics device of clause 419, wherein the dynamic eye tracking is utilized with a virtual textbook.
421. The wearable optics device of clause 131, wherein the dynamic eye tracking turns a page of a virtual book.
422. The wearable optics device of clause 420, wherein the dynamic eye tracking allows an instructor to determine where a user is in a given textbook.
423. The wearable optics device of clause 420, wherein an instructor can zoom in on one or more students documents.
424. The wearable optics device of clause 420, wherein messages can be retrieved 30 from or sent to an instructor by a student.
425. The wearable optics device of clause 424, wherein the instructor can zoom in and know characteristics of the student.
426. The wearable optics device of clause 424, wherein the instructor can check on 5 notes from one or more students.
427. The wearable optics device of clause 424, wherein the instructor can see what one or more student sees.
428. The wearable optics device of clause 424, wherein the instructor can measure student engagement using optical parameters.
429. The method of clause 420, wherein the optical parameters include any or any combination of ciliary, pupil, corneal, retina, lens, iris measurements.
430. The wearable optics device of clause 424, wherein the instructor can present messages to one or more students in real time and obtain feedback.
431. The wearable optics device of clause 131, wherein the wearable optics device is solar powered.
432. The wearable optics device of clause 131, wherein shading control is provided by at least one eye sensor and a camera.
433. The wearable optics device of clause 432, wherein the eye sensor and the camera determine what point the eye is looking at through the lens.
434. The wearable optics device of clause 432, wherein the eye sensor detects bright areas on the lens.
435. The wearable optics device of clause 432, wherein the eye sensor provides for dynamic tracking for each eye.
436. The wearable optics device of clause 131, which includes a bar code sensor.
437. The wearable optics device of clause 436, wherein the bar code includes 5 product information based on the scanning.
438. The wearable optics device of clause 131, wherein applications are executed utilizing an operating system with dynamic eye tracking.
439. The wearable optics device of clause 131, wherein browser information is executed utilizing a browser with dynamic eye tracking.
440. The wearable optics device of clause 131, wherein a perceptual measurements are utilized identify information is provided.
441. The wearable optics device of clause 440, wherein muscle measurement is utilized for perceptual enhancement.
442. The wearable optics device of clause 440, wherein central arch, nose, eyebrow muscle group is utilized for focusing and zoom function.
443. The wearable optics device of clause 131, wherein perceptual parameters are utilized to convey transmit and communicate perceptions and emotions of the user.
444. The wearable optics device of clause 131, wherein perceptual parameters are utilized in video games.
445. The wearable optics device of clause 131, wherein perceptual parameters are utilized in a social network environment.
446. The wearable optics device of clause 131, wherein perceptual parameters are utilized to provide a facial image.
447. The wearable optics device of clause 131, where the eyebrow, forehead sensor is utilized to convey surprise or doubt.
448. The wearable optics device of clause 131, wherein cheek position of the user is utilized to indicate happiness.
449. The wearable optics device of clause 131, wherein muscle movement is utilized as a proxy for speech.
450. The wearable optics device of clause 440, the nose bridge is utilized for perceptual enhancement.
451. The wearable optics device of clause 440, wherein the nose can be a speech is vehicle.
452. The wearable optics device of clause 447, wherein a sensor on the face senses moisture content.
453. The wearable optics device of clause 447, wherein the perceptual search utilizes gesture, gaze or eye movement to determine the focus of the search.
454. The wearable optics device of clause 131, wherein an eye of the user looks natural.
455. The wearable optics device of clause 454, a natural eye look provides an ability to show a representation of a clear view of the eye in real time.
456. The wearable optics device of clause 454, wherein a camera within the wearable optics device is utilized to provide the natural eye look.
457. The wearable optics device of clause 131, wherein a focal length of the lens is determined to improve performance of the device.
458. The wearable optics device of clause 457, wherein the focal length of the image displayed on the eyewear is matched to the varying focal length of the lens of the user.
459. The wearable optics device of clause 457, wherein a displayed augmented reality focal length is adjusted to match the varying focal length of the user.
460. The wearable optics device of clause 131, wherein ciliary measurement is utilized in conjunction with the dynamic eye tracking.
461. The wearable optics device of clause 460, wherein the ciliary measurement is an active measurement.
462. The wearable optics device of clause 461, wherein the active measurement comprises utilizing an infrared emitter to transmit infra red radiation into the eye and capture the return information and analyze the return information.
463. The wearable optics device of clause 460, wherein the ciliary measurement is a passive measurement.
464. The wearable optics device of clause 463, wherein the passive measurement 25 comprises utilizing retina or corneal imaging and determining the focal length by analysis
465. The wearable optics device of clause 461, wherein the active measurement utilizes an auto compensation feature
466. The wearable optics device of clause 463, wherein the passive measurement utilizes an auto compensation feature.
467. The wearable optics device of clause 461, wherein the active measurement utilizes a calibration process.
468. The wearable optics device of clause 463, wherein the passive measurement utilizes an auto compensation feature.
469. The wearable optics device of clause 460, wherein the ciliary measurement adjusts for the user eyesight and focus requirements.
470. The wearable optics device of clause 460, wherein the ciliary measurement utilizes a virtual lens for both calibration and real time operation.
471. The wearable optics device of clause 131, wherein the dynamic eye tracking is 15 utilized for navigation and fingers are utilized to make selection
472. The wearable optics device of clause 473, which includes a 10 click navigation mechanism using the fingers.
473. The wearable optics device of clause 471, wherein the navigation is simultaneous with the selection.
474. The wearable optics device of clause 131, further including eye cursor control and picture selection
475. The wearable optics device of clause 131, wherein recognition of information is augmented.
476. The wearable optics device of clause 131, wherein inverse shading is provide 30 when viewing a display.
477. The wearable optics device of clause 476, wherein inverse shading is provided by a polarized filter.
478. The wearable optics device of clause 131, wherein algorithms for shading and 5 inverse shading are provided within the wearable optics device.
479. The wearable optics device of clause 131, wherein algorithms are provided to transform non-visual spectrum to visible information.
480. The wearable optics device of clause 476, wherein the display is utilized with any of a smartphone, personal computer, laptop, desktop or portable device.
481. The wearable optics device of clause 480, wherein the background of the display is shaded out to allow one to see an object
482. The wearable optics device of clause 476, wherein an object is unshaded but the area outside of the object is shaded.
483. The wearable optics device of clause 476, wherein object recognition is 20 utilized.
484. The wearable optics device of clause 476, wherein if ambient light is above some predetermined value then you shade.
485. The wearable optics device of clause 476, wherein each lens has its own inverse shading.
486. The wearable optics device of clause 476, wherein translucency shading is provided for reading material.
487. The wearable optics device of clause 131 includes a power management mechanism.
488. The wearable optics device of clause 131 includes a charging mechanism.
489. The wearable optics device of clause 488, wherein the charging mechanism 5 comprises a direct electrical connection.
490. The wearable optics device of clause 488, wherein the charging mechanism comprises a solar charging system.
491. The wearable optics device of clause 488, wherein the charging mechanism comprises a magnetic induction system.
492. The wearable optics device of clause 488, wherein the charging mechanism comprises a connection to a smartphone.
493. The wearable optics device of clause 492, wherein the connection to the smartphone comprises any and any combination of a connection to a USB port, a direct electrical connection or a connection via magnetic induction.
494. The wearable optics device of clause 492, wherein the connection is a connection to a solar induction pad.
495. The wearable optics device of clause 488, wherein the charging mechanism comprises a connection to a laptop.
496. The wearable optics device of clause 495, wherein the connection to the laptop comprises any and any combination of a connection to a USB port, a direct electrical connection or a connection via magnetic induction.
497. The wearable optics device of clause 496, wherein the connection is a connection to a solar induction pad.
498. The wearable optics device of clause 488, wherein clothes are utilized in conjunction with the charging mechanism to charge the wearable optics device.
499. The wearable optics device of clause 131, wherein rapid motion encoding is utilized in conjunction with dynamic eye tracking.
500. The wearable optics device of clause 131, wherein DVR functions are utilized in conjunction with dynamic eye tracking.
501. The wearable optics device of clause 500, wherein the DVR functions include any or any combination of play, pause, record and replay.
502. The wearable optics device of clause 131, wherein the wearable optics device is utilized for dancing and fitness.
503. A method comprising:
   utilizing dynamic eye tracking with a wearable optics device; wherein an optical parameter based operating system is utilized based upon the dynamic eye tracking.
504. The method of clause 503, wherein the dynamic eye tracking is utilized to control the operating the system.
505. The method of clause 503, wherein applications are utilized to control sensors 25 and the communication of the wearable optics device.
506. The method of clause 503, wherein lenses are controlled by the operating system.
507. The method of clause 506, wherein the lens includes a plurality of layers.
508. The method of clause 503, wherein lens layer drivers and an eye cursor are controlled by the operating system.
509. A wearable optics device comprising:
   a lens; and
   a dynamic eye tracking mechanism in communication with the lens; wherein an optical parameter based operating system is utilized based upon the dynamic eye tracking.
510. The wearable optics system of clause 509, wherein the dynamic eye tracking is utilized to control the operating system.
511. The wearable optics system of clause 509, wherein applications are utilized to control sensors and the communication of the wearable optics device.
512. The wearable optics system of clause 509, wherein lenses is controlled by the operating system.
513. The wearable optics device of clause 509, wherein the lens includes a plurality 20 of layers.
514. The wearable optics system of clause 509, wherein lens layer drivers and an eye cursor are controlled by the operating system.
515. A method comprising:
   utilizing dynamic eye tracking with a wearable optics device; wherein shading or inverse shading is utilized based upon the dynamic eye tracking.
516. The method of clause 516, wherein inverse shading is provide when viewing a display.
517. The method of clause 502, wherein inverse shading is provided by a polarized filter.
518. The method of clause 517, wherein algorithms for shading and inverse 5 shading are provided within the wearable optics device.
519. The method of clause 515, wherein algorithms are provided to transform nonvisual spectrum to visible information.
520. The method of clause 516, wherein the display is utilized with any of a smartphone, personal computer, laptop, desktop or portable device.
521. The method of clause 516, wherein the background of the display is shaded out to allow one to see an object
522. The method of clause 515, wherein an object is unshaded but the area outside of the object is shaded.
523. The method of clause 515, wherein object recognition is utilized.
524. The method of clause 515, wherein if ambient light is above some predetermined value shading is provided.
525. The method of clause 515, wherein each lens has its own inverse shading.
526. The method of clause 515, wherein translucency shading is provided for reading material.
527. A wearable optics device comprising:
   a lens; and
   a dynamic eye tracking mechanism in communication with the lens; wherein shading or inverse shading is utilized based upon the dynamic eye tracking.
528. The wearable optics device of clause 527, wherein inverse shading is provide when viewing a display.
529. The wearable optics device of clause 527, wherein inverse shading is provided by a polarized filter.
530. The wearable optics device of clause 527, wherein algorithms for shading and inverse shading are provided within the wearable optics device.
531. The wearable optics device of clause 527, wherein algorithms are provided to transform non-visual spectrum to visible information.
532. The wearable optics device of clause 528, wherein the display is utilized with is any of a smartphone, personal computer, laptop, desktop or portable device.
533. The wearable optics device of clause 528, wherein the background of the display is shaded out to allow one to see an object
534. The wearable optics device of clause 527, wherein an object is unshaded but the area outside of the object is shaded.
535. The wearable optics device of clause 527, wherein object recognition is utilized.
536. The wearable optics device of clause 527, wherein if ambient light is above some predetermined value then you shade.
537. The wearable optics device of clause 527, wherein each lens has its own 30 inverse shading.
538. The wearable optics device of clause 530, wherein translucency shading is provided for reading material.
539. A method comprising:
   utilizing dynamic eye tracking with a wearable optics device; wherein a perceptual optimization is utilized based upon the dynamic eye tracking.
540. The method of clause 539 which includes providing an enhancement utilizing objective and subjective quality standards based upon perceptual parameters.
541. The method of clause 540, wherein the perceptual parameters include any and any combination of optical expression, voice, brain wave, environmental, audio, video, navigational, augmented reality, algorithmic, spatial, cognitive, interpretive.
542. The method of clause 539, wherein the wearable optics device controls any or any combination of mimics, amplifies, or expands a user perceptual physiology utilizing perceptual parameters.
543. The method of clause 541, wherein the optical expressions are images.
544. A wearable optics device comprising: a lens; and
   a dynamic eye tracking mechanism in communication with the lens; wherein a 25 perceptual optimization is utilized based upon the dynamic eye tracking.
545. The wearable optics device of clause 544 which includes providing an enhancement utilizing objective and subjective quality standards based upon perceptual parameters.
546. The wearable optics device of clause 544, wherein the perceptual parameters include any and any combination of optical expression, voice, brain wave, environmental, audio, video, navigational, augmented reality, algorithmic, spatial, cognitive, interpretive.
547. The wearable optics device of clause 544, wherein the wearable optics device 5 controls any or any combination of mimics, amplifies, or expands a user perceptual physiology utilizing perceptual parameters.
548. The wearable optics device of clause 546, wherein the optical expression is images.
549. A method comprising:
   utilizing dynamic eye tracking with a wearable optics device; wherein an augmented reality overlay is utilized based upon the dynamic eye tracking.
550. The method of clause 549, wherein an overlay translation is augmented reality overlay in real time.
551. The method of clause 549, wherein an overlay translation is provided in the wearable optics device using line of sight or focal length of the lens of the user to the object to provide an augmented reality overlay.
552. A wearable optics device comprising: a lens; and
   a dynamic eye tracking mechanism in communication with the lens; wherein an 25 augmented reality overlay is utilized based upon the dynamic eye tracking.
553. The wearable optics device of clause 552, wherein an overlay translation is augmented reality overlay in real time.
554. The wearable optics device of clause 552, wherein an overlay translation is provided in the wearable optics device using line of sight or focal length of the lens of the user to the object to provide an augmented reality overlay.
555. A method comprising:
   utilizing dynamic eye tracking with a wearable optics device; wherein augmented reality navigation is utilized based upon the dynamic eye tracking.
556. A wearable optics device comprising: a
   lens; and
   a dynamic eye tracking mechanism in communication with the lens; wherein augmented reality navigation is utilized based upon the dynamic eye tracking.

## Claims

1. A wearable optics device comprising:
a dynamic eye tracking mechanism in communication with a lens;
wherein the dynamic eye tracking mechanism is configured to determine a focal length or a line of sight;
wherein an augmented reality overlay is utilized based upon the determined focal length or line of sight.

2. The wearable optics device of claim 1, wherein the augmented reality overlay comprises an image presented on a billboard, road sign, laptop, personal computer, mobile phone, tablet computer, smart phone, desktop, portable device, wearable device or an object within the user's field of view.

3. The wearable optics device of claim 1 or 2, wherein an optical parameter based operating system is utilized based upon the dynamic eye tracking, wherein the dynamic eye tracking is utilized to control the operating system and the augmented reality overlay is responsive to the optical parameter based operating system.

4. The wearable optics device of any preceding claim, wherein perceptual optimization is utilized based upon the dynamic eye tracking.

5. The wearable optics device of claim 4, wherein the perceptual optimization includes an illumination feature, wherein the wearable optics device further comprises an illumination source for providing the illumination feature, and wherein the line of sight and focal length are used to control the illumination source such that an area corresponding to the area being focussed on by the user is illuminated.

6. The wearable optics device of claim 4, wherein the perceptual optimization includes one or more of: a zoom feature, a microscope feature or a magnifying feature.

7. The wearable optics device of claim 6, wherein an object to be enlarged is identified by eye movement, and optionally wherein the object to be enlarged is followed based upon the dynamic eye tracking, and/or wherein the object to be enlarged is stabilized.

8. The wearable optics device of any preceding claim, wherein the perceptual optimization includes one or more of: a retinal projection feature or a 360 degree viewing feature.

9. The wearable optics device of any preceding claim, wherein materials that electrically control any one of or combination of: chromatic, refractive, diffractive, reflective, transparent, prism based, holographic, polarizing, luminescent or filtering properties of the wearable optics device are utilized with the dynamic eye tracking.

10. The wearable optics device of any preceding claim, further comprising a camera and a processor operable to perform object and/or facial recognition in response to the camera and dynamic eye tracking mechanism.

11. The wearable optics device of any preceding claim, wherein the augmented reality control includes a shading/inverse-shading control disposed to shade one or more areas of the lens, and optionally wherein one or more portions of an image viewed by the wearable optics device are shaded to control brightness.

12. The wearable optics device of claim 10 or 11, wherein a shaded or translucent background follows an object viewed by the user in real-time to improve a user's ability to focus on the object.

13. The wearable optics device of any of claims 10 to 12, wherein shading/inverse-shading control is provided responsive to a measure of ambient light, and optionally wherein the object is a screen, and wherein shading/inverse shading control is provided if the ambient light is brighter than the screen.

14. The wearable optics device of any of claims 10 to13, wherein the dynamic eye tracking mechanism includes at least one eye sensor for determining a line of sight between an area to be shaded and the eye, and optionally wherein the shading/inverse shading is responsive to the line of sight between the area to be shaded and the eye.

15. The wearable optics device of any of claims 10 to14, further comprising one or more projectors for providing the shading/inverse shading control by projecting an occlusion on the lens.

16. The wearable optics device of any preceding claim, wherein the augmented reality overlay is utilized in conjunction with one of the following: an athletic event by a participant, an athletic event by a spectator, a dental procedure, a medical procedure, physical navigation, internet navigation.

17. The wearable optics device of any preceding claim, further comprising one or more sensors disposed to receive acceleration, gyroscopic, location, movement, or proximity information; anatomical, dental or medical information; athletic information; audio or audio noise cancellation information; image information; optical information; perceptual information; or training information.

18. The wearable optics device of any preceding claim, further comprising voice recognition circuitry and wherein voice recognition is utilized in conjunction with the dynamic eye tracking mechanism.
